(19) Europäisches Patentamt
European Patent Office
Office européen des brevets

(11) EP 4 317 120 A1

(12) **EUROPEAN PATENT APPLICATION**
published in accordance with Art. 153(4) EPC

(43) Date of publication:
**07.02.2024 Bulletin 2024/06**

(21) Application number: **22781325.0**

(22) Date of filing: **31.03.2022**

(51) International Patent Classification (IPC):
*C05C 9/00 (2006.01)* *C05G 5/30 (2020.01)*

(52) Cooperative Patent Classification (CPC):
**C05C 9/00; C05G 5/12; C05G 5/30; C09D 183/10; C09D 201/06**

(86) International application number:
**PCT/JP2022/016961**

(87) International publication number:
**WO 2022/211118 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2021 JP 2021061978**

(71) Applicant: **JCAM AGRI. CO., LTD.**
**Tokyo 101-0041 (JP)**

(72) Inventors:
- **KOREKANE, Yuriko**
**Tokyo 100-8251 (JP)**
- **TANIGAWA, Yuichi**
**Tokyo 100-8251 (JP)**
- **ADACHI, Koichi**
**Tokyo 100-8251 (JP)**
- **YOSHIDA, Tomohiro**
**Tokyo 101-0041 (JP)**
- **AOSAKI, Yoshimune**
**Tokyo 101-0041 (JP)**

(74) Representative: **Jones, Nicholas Andrew**
**Withers & Rogers LLP**
**2 London Bridge**
**London SE1 9RA (GB)**

# (54) FERTILISER COATING MATERIAL, COATED GRANULAR FERTILISER, AND METHOD FOR PRODUCING SAME

(57) The present invention is aimed at providing a fertilizer coating material that yields a film having a low moisture permeability. The present invention is also aimed at providing a slow-release coated granular fertilizer, which does not impose an environmental load caused by its coating shell residue after elution, by coating a granular fertilizer with the above-described fertilizer coating material. Further, the present invention is aimed at providing a coated granular fertilizer having a reduced floatability for the use in paddy fields and the like. Provided is a fertilizer coating material that contains a dehydration-condensation product of an OH group-containing resin and an alkoxysilane condensate.

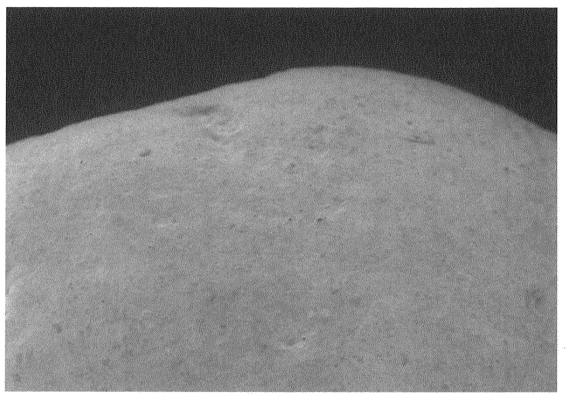

FIG. 4

EP 4 317 120 A1

**Description**

TECHNICAL FIELD

The present invention relates to a fertilizer, more particularly a fertilizer coating material, as well as a coated granular fertilizer and a method of producing the same.

BACKGROUND ART

Coated granular fertilizers, which are imparted with a function of continuously supplying a fertilizer component by surface-coating and encapsulation of a granular fertilizer with a coating material such as a resin, exhibit excellent elution control of their fertilizer components and have been recognized to be effective in, for example, achieving agricultural laborsaving and reducing the environmental load; therefore, such coated granular fertilizers have been considerably developed in recent years.

In other words, it is a well-known fact that coated granular fertilizers not only exert prominent effects in, for example, improving the use efficiency of fertilizer components on crops through inhibition of the overuse of fertilizers, reducing the runoff of fertilizer components into rivers and the like, and lowering the number of fertilization operations, but also have achieved remarkable successes in laborsaving and optimization of fertilization operations as well as in environmental conservation.

In recent years, however, there are concerns about environmental load in that, since those resins used as the coating material are nondegradable, coating shells are accumulated in the fields where the coated granular fertilizers are applied, and these shells flow out of the fields and are consequently accumulated in the ecosystem. Therefore, early development of a coated granular fertilizer excellent in both elution control and decomposition of its coating film is desired.

In this respect, various studies have been conducted for improvement of the decomposition of a coating film. For example, Patent Document 1 reports a technology of coating a fertilizer with a coating film that contains a copolymer of ethylene and an olefin having 3 or more carbon atoms, and/or a water-repelling starch and a metal oxide, and thereby providing a coated fertilizer that exhibits excellent degradation and decomposition of its coating film after elution into the soil.

Further, Patent Document 2 proposes a coated granular fertilizer that is provided with excellent decomposability in the soil by using a coating film formed of a combination of certain amounts of a low-molecular-weight polyethylene and/or a petroleum wax, which have a specific weight-average molecular weight, a specific ethylene-$\alpha$-olefin elastomer, a specific $\alpha$-olefin polymer, and a powder containing a sugar polymer or derivative thereof as a main component.

However, in these methods, since a non-biodegradable resin is used as a coating film main component of a coating film, the resulting coating shell partially remains in the environment after the use of the respective fertilizers, and these methods are thus inadequate for reducing the environmental load. In addition, when the fertilizers are used in a paddy field, there is a problem that their hydrophobic resin components are likely to float in water and flow out of the paddy field without remaining in the soil.

In this respect, technologies of using a biodegradable resin as a coating film of a coated granular fertilizer have been proposed as well. For example, Patent Document 3 discloses a technology of controlling the elution rate of a water-soluble polyvinyl alcohol into the soil by insolubilization of the polyvinyl alcohol in water through thermal crosslinking. However, the method of insolubilizing a polyvinyl alcohol in water by heating according to Patent Document 3 is substantially difficult to employ since, in reality, urea used as a granular fertilizer is thermally decomposed at about 130 to 140°C.

Moreover, various other technologies of using a biodegradable resin composition as a coating film of a coated granular fertilizer have been proposed; however, they are inadequate in terms of, for example, film stability and elution control as well as economic efficiency since the coating film is poor in water resistance due to its hydrophilicity.

RELATED ART DOCUMENTS

PATENT DOCUMENTS

[Patent Document 1] Japanese Unexamined Patent Application Publication No. 2004-75479
[Patent Document 2] Japanese Patent No. 4804632
[Patent Document 3] Japanese Unexamined Patent Application Publication No. H8-277191

## SUMMARY OF THE INVENTION

## PROBLEMS TO BE SOLVED BY THE INVENTION

As described above, in Patent Documents 1 to 3, it is difficult to obtain a coated granular fertilizer having a sufficiently reduced environmental load. An object of the present invention is to provide a fertilizer coating material that yields a film having a low moisture permeability. Another object of the present invention is to provide, by coating a granular fertilizer with the above-described fertilizer coating material, a slow-release coated granular fertilizer that does not impose an environmental load caused by its coating shell residue after elution. Yet another object of the present invention is to provide a coated granular fertilizer having a reduced floatability for the use in paddy fields and the like.

## MEANS FOR SOLVING THE PROBLEMS

In view of the above, the present inventors intensively studied and consequently discovered that, by preparing a dehydration-condensation product of an OH group-containing resin and a hydrolysate of an alkoxysilane condensate and coating a fertilizer with the resulting material, silanolic OH groups derived from the alkoxysilane condensate are condensed with the OH group-containing resin, as a result of which an environmentally-friendly fertilizer that not only can be used as a slow-release fertilizer because of its superior water resistance than a simple mixture of the above-described materials but also is decomposed after fulfilling its role as a fertilizer and leaves only silica, namely sand, in the soil can be obtained, thereby arriving at the present invention.
That is, the gist of the present invention is as follows.

[1] A fertilizer coating material, containing a dehydration-condensation product of an OH group-containing resin and an alkoxysilane condensate.
[2] The fertilizer coating material according to [1], wherein the OH group-containing resin is a biodegradable resin.
[3] The fertilizer coating material according to [1] or [2], wherein the OH group-containing resin is a resin having an alcoholic hydroxyl group or a carboxyl group.
[4] The fertilizer coating material according to any one of [1] to [3], containing a Si-O-C bond.
[5] The fertilizer coating material according to any one of [1] to [4], wherein the Si content is 20% by weight or more nad less than 95% by weight in terms of $SiO_2$.
[6] The fertilizer coating material according to any one of [1] to [5], wherein the OH group-containing resin is selected from the group consisting of polyvinyl alcohol resins, starch, cellulose, lignin, chitin, chitosan, PBS (polybutylene succinate), PBSA (polybutylene succinate adipate), PBAT (polybutylene adipate terephthalate), PCL (polycaprolactone), starch polyester, cellulose acetate, PHB (polyhydroxybutyrate), PHBH (poly(3-hydroxybutyrate-co-3-hydroxyhexanoate)), PHBV (poly(3-hydroxybutyrate-co-3-hydroxyvalerate)), PLA (polylactic acid), polyglycolic acid (PGA), polydioxanone (PDO), and copolymers thereof.
[7] The fertilizer coating material according to any one of [1] to [6], wherein the OH group-containing resin is a polyvinyl alcohol resin.
[8] The fertilizer coating material according to any one of [1] to [7], containing a three-dimensional siloxane crosslinked structure derived from the alkoxysilane condensate.
[9] The fertilizer coating material according to any one of [1] to [8], wherein the alkoxysilane condensate contains two or more kinds of alkoxysilanes.
[10] The fertilizer coating material according to any one of [1] to [9], containing at least a compound represented by Formula (1) as the alkoxysilane condensate:

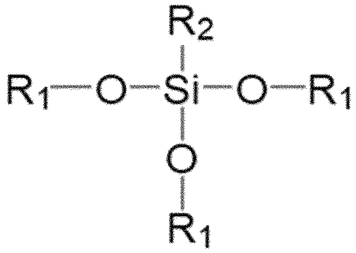

(1)

wherein, plural Ris each independently represent an alkyl group having 1 to 10 carbon chains or an aromatic group having 6 to 15 carbon atoms, and $R_2$ represents a hydrogen atom, a halogen atom, or a monovalent organic group.
[11] The fertilizer coating material according to [10], wherein the compound represented by Formula (1) is methyltrimethoxysilane.

[12] A coated granular fertilizer, coated with a film formed of the coating material according to any one of [1] to [11], wherein the content of the film formed of the coating material is 1% by mass or more and 20% by mass or less in 100% by mass of the coated granular fertilizer.

[13] The coated granular fertilizer according to [12], wherein a precoat layer is further arranged between the fertilizer and the film.

[14] The coated granular fertilizer according to [12] or [13], wherein the precoat layer contains a biodegradable resin selected from the group consisting of polyvinyl alcohol resins, starch, cellulose, lignin, chitin, chitosan, PBS (polybutylene succinate), PBSA (polybutylene succinate adipate), PBAT (polybutylene adipate terephthalate), PCL (polycaprolactone), starch polyester, cellulose acetate, PHB (polyhydroxybutyrate), PHBH (poly(3-hydroxybutyrate-co-3-hydroxyhexanoate)), PHBV (poly(3-hydroxybutyrate-co-3-hydroxyvalerate)), PLA (polylactic acid), PGA (polyglycolic acid), PDO (polydioxanone), and copolymers thereof.

[15] A method of producing a coated granular fertilizer, the method including the steps of:

mixing a solution containing an alkoxysilane condensate with a solution containing an OH group-containing resin;
spraying the resulting coating liquid to a fertilizer; and
drying the resultant.

[16] The method of producing a coated granular fertilizer according [15], further including, during or after the drying, performing a heat treatment at 140°C or lower.

## EFFECTS OF THE INVENTION

According to the present invention, a fertilizer coating material that yields a film having a low moisture permeability can be provided. In addition, by coating a granular fertilizer with this fertilizer coating material, a slow-release coated granular fertilizer that does not impose an environmental load caused by its coating shell residue after elution can be provided. Further, a coated granular fertilizer having a reduced floatability for the use in paddy fields and the like can be provided.

## BRIEF DESCRIPTION OF THE DRAWINGS

[FIG. 1] FIG. 1 is a schematic drawing of an apparatus used for coating a fertilizer with a fertilizer coating material.
[FIG. 2] FIG. 2 is a schematic drawing of another apparatus used for coating a fertilizer with a fertilizer coating material.
[FIG. 3] FIG. 3 is a scanning electron micrograph (drawing substitute) of the coated granular fertilizer of Comparative Example 8.
[FIG. 4] FIG. 4 is a scanning electron micrograph (drawing substitute) of the coated granular fertilizer of Example 20.

## MODE FOR CARRYING OUT THE INVENTION

Embodiments of the present invention will now be described; however, the present invention is not limited to the below-described embodiments.

In the present specification, those numerical ranges stated with "to" each denote a range that includes the numerical values stated before and after "to" as the lower limit value and the upper limit value, respectively, and an expression "A to B" means a value that is A or more and B or less.

One embodiment of the present invention is a fertilizer coating material that contains a dehydration-condensation product (dehydration-condensation compound) of an OH group-containing resin and an alkoxysilane condensate, and another embodiment of the present invention is a coated granular fertilizer in which a fertilizer is coated with the fertilizer coating material. In the present specification, the "dehydration-condensation product of an OH group-containing resin and an alkoxysilane condensate" refers to a reaction product (specifically, a compound obtained by a dehydration-condensation reaction) of an OH group-containing resin and an alkoxysilane condensate, which reaction product is a compound that has a structure derived from the OH group-containing resin and a structure derived from the alkoxysilane condensate.

### (OH Group-Containing Resin)

The OH group-containing resin according to the present embodiment is a resin which reacts with OH groups

existing in a hydrolysis-condensation product of an alkoxysilane condensate to form Si-O-C bonds and is in a state where silicon and the resin are chemically bound with each other. Accordingly, the OH group is preferably a carboxyl group or an alcoholic hydroxyl group, particularly preferably an alcoholic hydroxyl group.

Specifically, the resin is preferably one having a biodegradability. As for a specific definition of biodegradability, the Biodegradable Plastics Society in 1989 defined biodegradable plastics as "plastics that are, with involvement of microorganisms in nature, decomposable into low-molecular-weight compounds not adversely affecting the environment". This expression is ambiguous and, in Annapolis Summit of 1993, biodegradable materials were defined as "materials that can be completely consumed by the action of microbes and generate only natural byproducts (carbon dioxide, methane, water, biomass, and the like)". In the present specification, the latter definition is used for biodegradability. Specific examples of a preferred resin include resins selected from the group consisting of polyvinyl alcohol resins, starch, cellulose, lignin, chitin, chitosan, PBS (polybutylene succinate), PBSA (polybutylene succinate adipate), PBAT (polybutylene adipate terephthalate), PCL (polycaprolactone), starch polyester, cellulose acetate, PHB (polyhydroxybutyrate), PHBH (poly(3-hydroxybutyrate-co-3-hydroxyhexanoate)), PHBV (poly(3-hydroxybutyrate-co-3-hydroxyvalerate)), PLA (polylactic acid), PGA (polyglycolic acid), PDO (polydioxanone), and copolymers thereof. Among these resins, for example, when importance is given to the environmental aspects, PBS (polybutylene succinate) and PBSA (polybutylene succinate adipate) and the like are preferred since they have an established method of production from a biomass raw material and, for the case of heat-melting and applying the resin as a liquid, PCL (polycaprolactone) is preferred because of its low melting point. Further, starch, cellulose, lignin, chitin, chitosan, and the like are preferred from the standpoint of utilizing a natural material, and PLA (polylactic acid) and the like having excellent physical properties are preferred since they are unlikely to be broken by a force applied thereto. Nevertheless, a polyvinyl alcohol resin is most preferred since it contains a large number of hydroxy groups and has a high degree of freedom in its properties, making it easy to, for example, adjust the level of complex (Si-O-C bond) formation. These resins may be used in the form of a modified product. Further, two or more kinds of the above-described biodegradable resins may be used in combination as a mixture. The above-described polymers can be crosslinked as well.

In the coated granular fertilizer according to the present embodiment, plural coating layers may be formed by precoating the inner side of a coating film formed of a coating material. The coating film in the coated granular fertilizer according to the present embodiment may further include other coating layer(s) within a range that does not impair the effects of the present invention. For example, a layer such as a coating film that contains a fertilizer component (e.g., a trace element), a fertilizer enhancer, a pesticidal ingredient or the like, a coating film provided with mechanical resistance, a coating film for the inhibition of flotation under a flooding condition of a paddy field or the like, or a coating film for controlling the degradability of coating films as a whole, can be formed on the outermost layer.

The polyvinyl alcohol resin (hereinafter, may be referred to as "PVA-based resin") is not particularly limited in terms of its concrete structure as long as it is a resin having a vinyl alcohol structural unit and, typically, it can be obtained by, but not limited to, saponification of a polycarboxylic acid vinyl ester generated by polymerizing a vinyl carboxylate monomer such as vinyl acetate.

The PVA-based resin is, for example, an unmodified PVA or a modified PVA-based resin. The modified PVA resin may be a copolymerization-modified PVA-based resin synthesized by copolymerizing a monomer other than a vinyl ester monomer that gives a PVA structural unit, or a post-modified PVA-based resin obtained by synthesizing an unmodified PVA and subsequently modifying its main chain or side chain with an appropriate compound. Examples of the modified PVA-based resin include: GOHSENOL (R), GOHSENX (R), and NICHIGO G-POLYMER, which are manufactured by Mitsubishi Chemical Corporation; and KURARAY POVAL and ELVANOL, which are manufactured by Kuraray Co., Ltd.

Examples of a copolymerizable monomer (unsaturated monomer) that can be used in the copolymerization-modified PVA-based resin include: olefins, such as ethylene, propylene, isobutylene, $\alpha$-octene, $\alpha$-dodecene, and $\alpha$-octadecene; hydroxy group-containing $\alpha$-olefins, such as 3-buten-1-ol, 4-penten-1-ol, and 5-hexen-1-ol, as well as acylation products and other derivatives thereof; unsaturated acids, such as acrylic acid, methacrylic acid, crotonic acid, maleic acid, maleic anhydride, itaconic acid, and undecylenic acid, as well as salts, monoesters, and dialkyl esters thereof; amides, such as diacetone acrylamide, acrylamide, and methacrylamide; olefin sulfonic acids, such as ethylene sulfonic acid, allyl sulfonic acid, and methallyl sulfonic acid, as well as salts thereof; quaternary ammonium salts, such as diallyldimethyl ammonium chloride and diallyldiethyl ammonium bromide; substituted vinyl acetates, such as isopropenyl acetate and 1-methoxyvinyl acetate; and poly(oxyalkylene) group-containing allyl ethers, such as polyethylene glycol allyl ether, methoxypolyethylene glycol allyl ether, polypropylene glycol allyl ether, and polyethylene glycol-polypropylene glycol allyl ether.

Further, examples of the copolymerization-modified PVA-based resin include PVA-based resins having a primary hydroxy group in a side chain. Examples of such PVA-based resins include: side chain 1,2-diol-modified PVA-based resins obtained by copolymerizing 3,4-diacetoxy-1-butene, vinylethylene carbonate, glycerol monoallyl ether, or the like; and PVA-based resins having a hydroxymethyl group in a side chain, which are obtained by copolymerizing a hydroxymethyl vinylidene diacetate, such as 1,3-diacetoxy-2-methylene propane, 1,3-dipropionyloxy-2-methylene propane, or 1,3-dibutyronyloxy-2-methylene propane, and saponifying the resultant.

Examples of a post-modification method for obtaining the post-modified PVA-based resin include acetoacetic acid esterification, acetalization, urethanization, etherification, grafting, phosphoric acid esterification, and oxyalkylenation of an unmodified PVA or any of the above-described modified PVA-based resins.

In the present embodiment, any of the above-described unmodified PVA and modified PVA-based resins can be used; however, a completely saponified product is preferred for the case of an unmodified PVA, while an anionic modification group-containing PVA having a highly hydrophilic functional group, such as a carboxylic acid group or a sulfonic acid group, in a side chain, a cationic modification group-containing PVA having a quaternary ammonium salt group or the like, or a nonionic modification group-containing PVA having a hydroxyalkyl group, an oxyethylene group, or the like is preferred for the case of a modified PVA-based resin.

When importance is given to the amount of OH groups reacting with silanol groups, an unmodified PVA is particularly preferred because of its high reactivity with the below-described silicate. When importance is given to the compatibility between the silicate and a PVA solution, it is preferred to use a partially saponified product and, when importance is given to the bindability of the silicate and a PVA, i.e. Si-O-C bond formation, it is preferred to use a completely saponified product.

The PVA-based resin has a saponification degree of usually 70% by mole or higher, preferably 80% by mole or higher, more preferably 98% by mole or higher. An upper limit of the saponification degree is usually 100% by mole or lower, preferably 99.8% by mole or lower. The saponification degree is a value determined by the titration method prescribed in JIS K6726.

The average polymerization degree of the PVA-based resin is not particularly limited; however, it is usually 200 or more and 3,000 or less, preferably 250 or more and 2,800 or less, particularly preferably 300 or more and 2,600 or less. By controlling the average polymerization degree in this range, an excessive reduction in the elution of the coated fertilizer is inhibited, and cracking of the coating film is likely to be inhibited. The average polymerization degree is a value determined by an aqueous solution viscosity measuring method (JIS K6726).

The PVA resin may be used singly, or in combination of two or more kinds thereof by blending. In the latter case, the two or more kinds of PVA-based resins may have different structural units, different saponification degrees, and/or different average polymerization degrees. When such PVA resins are used by blending, the PVA-based resins may have any saponification degree, average polymerization degree, and the like, as long as average values of all of the PVA-based resins are within the above-described respective ranges.

The PVA-based resin may be partially modified as well. When the PVA-based resin is modified, the modification rate of the PVA resin is preferably in a range that, when 10 g of particles of the resin is mixed with 100 g of 20°C water and dispersed with stirring and the resultant is subsequently heated to 90°C with stirring at a rate of 1°C/min, at least 90% by weight of the particles is dissolved within 60 minutes.

The type of the modification is not particularly limited as long as the resulting modified PVA resin has OH groups; however, when a strong acid or a basic group is introduced in water, the modification amount is preferably in a range that the strong acid or the basic group does not exert a catalytic effect in the process of forming a complex with a silicate.

From the standpoint of the ease of obtaining a fertilizer coating material that yields a film having a low moisture permeability, a ratio of the weight of a component (structure) derived from the OH group-containing resin with respect to a total weight of the fertilizer coating material (or dehydration-condensation product) is usually 1% by weight or more, preferably 4% by weight or more, more preferably 6% by weight or more, still more preferably 35% by weight or more, yet still more preferably 45% by weight or more, but usually 85% by weight or less, preferably 82% by weight or less, more preferably 75% by weight or less, still more preferably 70% by weight or less, yet still more preferably 65% by weight or less.

(Hydrolysis-Condensation Product of Alkoxysilane Condensate)

A hydrolysis-condensation product of the alkoxysilane condensate used in the present embodiment binds with the OH group-containing resin to generate Si-O-C bonds.

The term "alkoxysilane condensate" used herein refers to a compound generated by hydrolytic condensation of an alkoxysilane.

The alkoxysilane is not particularly limited as long as it is a silane having an alkoxy group, and examples of the alkoxy group include: aliphatic alkoxy groups having 1 to 10 carbon atoms, such as a methoxy group, an ethoxy group, a propoxy group, and a butoxy group; and aromatic alkoxy groups having 6 to 15 carbon atoms, such as a phenoxy group and an aryloxy group. From the standpoint of the ease of controlling the hydrolysis reaction, the alkoxy group is desirably an aliphatic alkoxy group having 1 to 4 carbon atoms.

Examples of the alkoxysilane include monoalkoxysilanes, dialkoxysilanes, trialkoxysilanes, and tetraalkoxysilanes. A tetraalkoxysilane that contains a large number of siloxane bonds and is unlikely to allow water vapor to pass

therethrough when hydrolyzed and condensed is preferred. Examples of such a tetraalkoxysilane include tetramethoxysilane, tetraethoxysilane, tetrapropoxysilane, tetraisopropoxysilane, tetrabutoxysilane, and tetrakis(2-ethylhexyloxysilane). In the alkoxysilane condensate, alkoxysilanes may be contained singly or in combination of two or more kinds thereof; however, the alkoxysilane condensate preferably contains two or more kinds of alkoxysilanes.

In the case of using any of the above-described alkoxysilane monomers as a raw material, it is difficult to control its hydrolysis reaction and condensation reaction; therefore, it is preferred to use an alkoxysilane condensate that has been allowed to undergo a hydrolysis-condensation reaction in advance.

Such an alkoxysilane condensate is, for example, a substance containing siloxane bond chains and alkoxy groups, which has a structural formula represented by the following Formula (2).

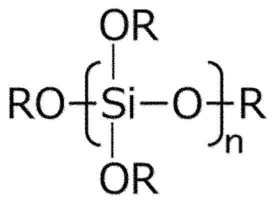

(2)

In Formula (2), plural Rs each independently represent an alkyl group having 1 to 10 carbon chains or an aromatic group having 6 to 15 carbon atoms. Thereamong, an alkyl group having 1 to 4 carbon atoms, whose reaction is easily controllable with a catalyst species or the like, is preferred, and a methyl group whose hydrolysis reaction rate is high and more easily controllable is particularly preferred. The "n" represents the number of repeating structural units and is not particularly limited, and it may be preferably 2 or more and 10 or less, 2 or more and 8 or less, or 2 or more and 5 or less. By controlling the value of n in this range, an improved compatibility is obtained when a hydrolysis-polycondensation product is generated and mixed with a solution of the OH group-containing resin. From the standpoint of controlling the reactivity with the OH group-containing resin, it is preferred that hardly any OH group exist in the alkoxysilane condensate itself used as a raw material. OH groups in the alkoxysilane condensate can be analyzed by $^1$H-NMR or the like. For example, when a condensate of methoxysilane having 3 to 5 repeating structural units is analyzed by $^1$H-NMR using a deuterated dimethyl sulfoxide solvent (hereinafter, referred to as "DMSO-d6"), a peak of methoxy group appears at about $\delta$ = 3.4 ppm and, if the condensate has an OH group, a broad peak appears at about $\delta$ = 8.0 to 6.0 ppm. A lower integral ratio of the peak of OH group with respect to the peak of alkoxy group indicates a smaller amount of OH groups. When the integral value of OH group is (0.1) or less with respect to an integral value of alkoxy group of 100, the alkoxysilane condensate stably exists without self-condensation and its reactivity does not change.

As such an alkoxysilane condensate, for example, MKC (registered trademark) silicate manufactured by Mitsubishi Chemical Corporation and the like can be used.

In the present embodiment, a hydrolysate of this alkoxysilane condensate is mixed together with a solution containing the OH group-containing resin, and the resultant is applied and then dried, whereby performance is exerted. There is a method of adding an unhydrolyzed alkoxysilane to a solution containing the OH group-containing resin and subsequently performing hydrolysis and condensation of the resultant in the presence of the OH group-containing resin; however, since the OH group-containing resin inhibits the hydrolysis reaction and the condensation reaction of the alkoxysilane, this method may not yield a sufficient amount of silanol groups for the generation of Si-O-C bonds with the OH group-containing resin. In addition, when the solution containing the OH group-containing resin contains a large amount of water, not only it is difficult to control the hydrolysis reaction and the condensation reaction of the alkoxysilane, but also consumption of water by the hydrolysis reaction may cause precipitation of the OH group-containing resin. In the present invention, a hydrolysis-polycondensation product, which is obtained in the presence of a catalyst by hydrolysis and condensation of a highly safe alkoxysilane condensate whose hydrolysis reaction and condensation reaction are easy to control, and a solution containing the OH group-containing resin are prepared separately and then mixed, whereby a composite liquid having an improved reactivity can be produced.

In order to impart flexibility, strength, and the like to the resulting film, a third component can be added in addition to the hydrolysate of the alkoxysilane condensate and the OH group-containing resin that constitute the film. As the third component, it is preferred to use an alkoxysilane which can be bound with a hydrate of the alkoxysilane condensate through a hydrolysis-condensation reaction at the time of hydrolyzing the alkoxysilane condensate. Examples of this alkoxysilane include tetraalkoxysilanes, trialkoxysilanes, dialkoxysilanes, and monoalkoxysilanes; however, a trialkoxysilane is most preferred from the standpoint of reducing the siloxane bond defects and providing flexibility in the resulting hydrolysis-condensation product. Particularly, the alkoxysilane preferably has a structure represented by the following Formula (1). In other words, the coating material preferably contains at least a compound having a structure represented by Formula (1) as the above-described alkoxysilane condensate.

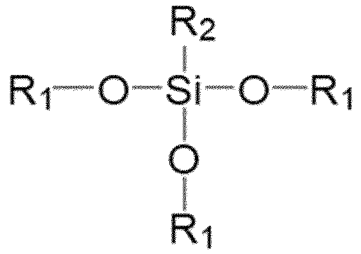

(1)

In Formula (1), plural Ris each independently represent an alkyl group having 1 to 10 carbon chains or an aromatic group having 6 to 15 carbon atoms, and $R_2$ represents a hydrogen atom, a halogen atom, or a monovalent organic group. The monovalent organic group is not particularly limited, and examples thereof include alkyl groups having 1 to 10 carbon chains, aromatics having 6 to 15 carbon atoms, an isocyanate group, halogenated alkyl groups, a urea group, an amino group, a vinyl group, a glycidyl group, an epoxy group, an allyl group, an aryl group, a methacrylate group, a cyclohexyl group, an azido group, a mercapto group, carbamic acid, ammonium salts, succinic anhydride, phosphine derivatives, naphthalene derivatives, and pyridine derivatives. The monovalent organic group can be selected in accordance with the intended performance. The carbon chains may have a straight-chain structure or a branched-chain structure. These functional groups may have a crosslinked structure such as that of norbornene. Among such functional groups, a functional group having a low environmental load is preferred in the compound represented by Formula (1), and the compound represented by Formula (1) is preferably methyltrimethoxysilane from the standpoint of flexibility of the resulting film and availability.

Since an object of the present invention is to inhibit the early elution of a fertilizer by coating the fertilizer with a fertilizer coating material, it is preferred to use a monoalkoxysilane or a dialkoxysilane, which is a low-crosslinkable component, as an additive for imparting functionality, and to control the amount thereof to be as small as possible so that swelling and dissolution of the OH group-containing resin component contained in composite particles are not facilitated.

The alkoxysilane condensate is preferably hydrolyzed in a solvent to form a three-dimensional siloxane crosslinked structure as a hydrolysis-polycondensation product, and the alkoxysilane condensate may be a low condensation product as well. The term "low condensation product" used herein means an alkoxysilane oligomer of about 2 to 10 monomers, and the low condensation product may be an oligomer of about 2 to 8 monomers, or an oligomer of about 2 to 5 monomers. As the solvent, for example, a lower alcohol having 1 to 4 carbon atoms, such as methanol, ethanol, or propanol, or a mixture thereof with water is usually used.

A component (structure) including an alkoxysilane hydrolysis-polycondensation product that is contained in the fertilizer coating material of the present embodiment has a Si content of usually not less than 20% by weight, preferably not less than 40% by weight, more preferably not less than 50% by weight, but usually less than 95% by weight, preferably 93% by weight or less, in terms of $SiO_2$ with respect to a total weight of the fertilizer coating material. As for the term "in terms of $SiO_2$" used herein, the weight in terms of $SiO_2$ is determined from, as shown in the following equation (3), the molecular weight and the amount of the used alkoxysilane condensate, the molecular weight and the amount of the generated hydrolysate of the alkoxysilane condensate, and the molecular weight of $SiO_2$ when the hydrolysate of the alkoxysilane condensate is entirely condensed into $SiO_2$. The above-described Si content can be adopted as the Si content with respect to a total weight of the fertilizer coating material.

$$\text{Weight in terms of } SiO_2 = \left( \text{Weight of alkoxysilane condensate} \times \frac{[\text{Molecular weight of hydrolysate of alkoxysilane condensate}]}{[\text{Molecular weight of alkoxysilane condensate}]} \right) \times \frac{\text{Molecular weight of } SiO_2}{[\text{Molecular weight of hydrolysate of alkoxysilane condensate}]} \quad (3)$$

The $SiO_2$ content with respect to a total weight of the fertilizer coating material can be quantified using an

inductively-coupled plasma (ICP) emission spectrometer or the like after a treatment of a separated film used for the below-described FT-IR analysis.

The resulting fertilizer coating material has a Si-O-C structure (bond). This Si-O-C structure can be verified by Fourier transform infrared spectroscopy.

In the Fourier transform infrared spectroscopy (hereinafter, referred to as "FT-IR"), a method of verifying the presence of a Si-O-C structure is as follows. In FT-IR measurement, the vibration mode of each atomic group appears in a region of 1,500 to 1,200 $cm^{-1}$. According to Hitachi Review, vol. 43, No. 5, 90-94 (S36.5), coupling of the bending vibration of OH groups in PVA and other vibration appears at 1,430 $cm^{-1}$ $\pm$ 30 $cm^{-1}$ and 1,326 $cm^{-1}$ $\pm$ 25 $cm^{-1}$. A silicate does not show a peak in a region between 2,000 $cm^{-1}$ and 1,300 $cm^{-1}$. From this, it is seen that this peak is reduced or eliminated since the formation of a Si-O-C structure in a composite film leads to a reduction in the amount of OH groups and thus a reduction in coupling with other vibration.

Examples of measurement method include transmission methods and reflection methods and, the reflection methods are prefer, and among reflection methods, an ATR method that is not affected by the shape and the like of a sample to be measured is particularly preferred. When the measurement is performed by an ATR method, from the standpoint of measurable wavenumber range, the prism to be used is most preferably a diamond prism.

In an analysis by FT-IR, data can be obtained by performing integration in a single measurement. The accuracy of the resulting spectrum is improved by the integration, so that highly reliable values can be obtained. The number of integrations is 2 to the power of n. This number is not particularly limited; however, it is preferably 64 or more, particularly preferably 128 or more.

It is preferred to set the resolution of the spectrum to be measured. A smaller value of the resolution leads to a further improvement in the accuracy of the spectrum, so that more reliable values can be obtained. The resolution is set at a value of 4 $cm^{-1}$ or less.

In FT-IR, a background measurement is preferably performed at the time of measuring a measurement object. The "background measurement" refers to a correction performed for deducting absorption components such as water vapor and carbon dioxide in the air. By this, measurement errors caused by moisture and carbon dioxide in the air can be eliminated. The background measurement is performed prior to the above-described measurement.

The spectrum obtained by FT-IR is phase-corrected. This phase correction is automatically performed by an FT-IR software during measurement. Examples of a phase correction method include, but not particularly limited to: an absolute value method; a multiplication method; a convolution method; and a manual method, and the phase correction method can be selected in accordance with the characteristics of the sample to be measured. For example, in the case of using an apparatus iN10MX manufactured by Thermo Fisher Scientific K.K., the Mertz method or power spectrum method can be selected. As long as obviously odd results are generated, the Mertz method is usually employed.

The strength of the spectrum obtained by FT-IR is indicated by absorbance.

When the spectrum obtained by FT-IR is indicated in absorbance, a baseline correction is performed. This is because peak strength ratio and area values cannot be accurately obtained when the baseline of the obtained spectrum is distorted. A method of this baseline correction is not particularly limited, and an appropriate method is employed in accordance with the obtained spectrum. For example, in a software OMNIC (version 8.3 or later) manufactured by Thermo Fisher Scientific K.K., the obtained spectrum is analyzed and the most preferred correction method is selected automatically. In this software, a linear (first-order) interpolation method, a cubic spline interpolation method, or a polynomial interpolation method can be selected.

The spectrum obtained by FT-IR is subjected to smoothing. The purpose thereof is to prevent detection of a small distortion of the spectrum as a peak at the time of performing the below-described peak separation. Small distortions can be cleaned by the smoothing, and this enables to perform the peak separation calculation more accurately. Examples of a smoothing method include, but not particularly limited to, a simple moving average method and the Sacutzkey-Golay method, and an appropriate method is employed in accordance with the obtained spectrum, as well as the software to be used in an automated case. For example, in a software OMNIC (version 8.3 or later) manufactured by Thermo Fisher Scientific K.K., the obtained spectrum is analyzed and the most preferred range is selected automatically. Further, in this software, a wavenumber interval for the smoothing can be specified. When the specified wavenumber interval is small, smoothing is performed while maintaining the original shape of the spectrum; however, the spectral line is not sufficiently smoothed. Conversely, when the specified wavenumber interval is large, the spectral line is further smoothed; however, the shape thereof deviates from the original shape of the spectrum. Therefore, it is important to specify an appropriate interval for the smoothing. The specified interval is preferably 9.642 $cm^{-1}$ or more and 48.212 $cm^{-1}$ or less; however, when noise, impurities, and the like are expected to have a large effect, the interval can be set in a range of 13.499 $cm^{-1}$ or more and 28.927 $cm^{-1}$ or less to perform the smoothing without compromising the spectral peaks.

Peaks of the spectrum obtained by FT-IR are subjected to peak separation. This is because the peak separation can not only prevent overlapping peaks from increasing the actual peak strength and making it impossible to perform an accurate evaluation, but also enable to calculate the amount of Si-O-C bonds from the below-described area ratio of separated peaks. A variety of peak separation methods and techniques are available, and the calculation can be performed automatically using a software. In the present specification, peak separation was performed using a software OMNIC (version 8.3 or later) manufactured by Thermo Fisher Scientific K.K.

For the peak detection using the above-descried software, wavenumbers to be separated are specified. As a specified range, the range used for drawing the baseline may be used, which is in a range of 4,000 $cm^{-1}$ to 400 $cm^{-1}$. When the baseline in this range is deemed inappropriate, a range of 2,000 $cm^{-1}$ to 800 $cm^{-1}$ is used. Further, when detecting peaks in a specified range, initial values of the peaks to be detected are set. The peak detection is usually performed in a specified range with the value of full width at half maximum being set at 3.857. In this process, those peaks that are detected due to distortion of the baseline may be removed.

In the peak detection, the Voigt function is usually used as a distribution function; however, depending on the situation, a Gaussian function, a Lorentzian function, a Gaussian-Lorentzian function, or a log-normal function is used. Further, the sensitivity of the peak detection at the set value of full width at half maximum can be set. Usually, in order to prevent unnecessary peak detection, the sensitivity is set low using an accessory program provided in an apparatus; however, when no peak is detected, the sensitivity can be set medium or high. Peak fitting is performed using the thus detected peaks. In this process, an acceptable range of the standard deviation value between the original spectrum and the resulting synthetic spectrum can be set in advance to perform calculation. This acceptable range is taken as noise. The noise value can be set in a range of 1 to 10 and, when this value is large, the standard deviation value is also large, i.e. the resulting spectrum and the original spectrum are largely different, while when the noise value is small, the standard deviation value is also small, i.e. the resulting spectrum is likely to conform to the original spectrum. The noise value is usually set at 10; however, it may be smaller when the standard deviation value is large.

Further, the baseline can be corrected at the time of the peak fitting. A first-order (linear) correction is usually performed; however, a second-order correction and/or a third-order correction may be performed depending on the obtained spectrum. The software to be used performs calculation repeatedly; therefore, even when the standard deviation value of a synthetic spectrum obtained by a first calculation is greater than a reference value, a synthetic spectrum more similar to the original spectrum is generated by performing the calculation again under the same conditions. The term "synthetic spectrum" used herein refers to an IR spectrum obtained by combining the thus calculated individual spectra. When the standard deviation value is greater than the reference value even after repeated calculations, the value of full width at half maximum of peaks to be detected may be different; therefore, the value of full width at half maximum is modified to perform the peak detection again, and the peak fitting is repeated. These operations and calculations are repeated until the standard deviation value is equal to or less than the reference value. Although the standard deviation value is preferably 1.5 or less, it is preferably as small as possible; therefore, while trying out values of 1.0 or less, 0.7 or less and so on, the standard deviation value is lowered within a range that does not bring about a situation where the separated peaks cause distortion of the baseline. The standard deviation value is most preferably 0.5 or less.

The software used in the present embodiment is usually OMINIC Version 8.3 or later; however, any software can be used as long as it is capable of performing peak detection and calculation with the full width at half maximum being set.

A sample to be measured by FT-IR varies depending on the measurement method; however, measurement can be performed using the sample in the state of a coated granular fertilizer, in the state of a separated film by itself (or in the state of a fertilizer coating material), or in the state of a self-standing film produced under the same conditions as in the production of a coated granular fertilizer. When it is necessary to perform the measurement quickly, the sample is preferably measured in the state of a coated granular fertilizer, or when it is necessary to make a highly accurate analysis, the sample is preferably measured in the state of a separated film by itself or a self-standing film. In the case of measuring the sample in the state of a coated granular fertilizer, the sample may be measured as is, or may be subjected to a drying treatment prior to the measurement. A drying temperature is not particularly specified; however, it is preferred that the drying temperature do not affect the amount of Si-O-C bonds in the film and be 120°C or lower.

The drying time can be changed as appropriate in accordance with the drying temperature. When a separated film is measured by itself, a method of separating the film is not particularly limited, and a method of machining the film or a method of putting a coated fertilizer into water to dissolve its fertilizer component and subsequently washing and drying the resultant may be employed. Machining is a method of recovering a film by scraping the surface of a coated granular fertilizer using a sharp knife or the like. In the other method, a coated granular fertilizer is put into water to dissolve its fertilizer component, and only a film is recovered. In this process, the water may be heated so as to improve the dissolution efficiency. The temperature of water dissolving urea may be any temperature that does not affect the amount of Si-O-C bonds in the film and, from the standpoint of efficiency and workability, it is preferably about 20 to 60°C.

The separated film is preferably washed with water so as to remove residual fertilizer component. The extracted film is usually washed with water; however, it may be washed with an organic solvent. Examples of the organic solvent include alcohol, acetone, and aliphatic hydrocarbons such as heptane, and the organic solvent is not particularly limited as long as it is capable of washing off the fertilizer component. These solvents can also be used in combination by mixing. The amount of the solvent(s) to be used for the washing is not limited, and it is preferably such an amount that a spectrum attributed to the fertilizer component is not detected at the time of the measurement. After the washing, the

film is preferably dried so as to remove water therefrom. The drying temperature is not particularly limited as long as it does not affect the amount of Si-O-C bonds in the film and water can be removed from the film; however, the drying temperature is preferably about 60 to 80°C.

With regard to a composite film, Si-O-C bond can be confirmed by comparing the area of a stretching vibration peak of Si-O-Si bond that appears at 1,050 $cm^{-1}$ $\pm$ 25 $cm^{-1}$ with the area of a peak at about 1,430 $cm^{-1}$ $\pm$ 30 $cm^{-1}$ or 1,326 $cm^{-1}$ $\pm$ 25 $cm^{-1}$. In this process, the wavenumber of each peak top may vary depending on the measurement conditions and the sample state. The areas of these peaks can be compared in terms of the area values of isolated peaks that are calculated from a synthetic spectrum having a standard deviation value of 1.0 or less. Defining the ratio of spectral peaks as PVA/Si-O-Si, a peak at 1,430 $cm^{-1}$ is usually used as the peak of the PVA being used; however, there is no problem to use a peak at 1,326 $cm^{-1}$ since the peak area does not change. A smaller value of PVA/Si-O-Si means a greater amount of generated Si-O-C bonds, and this value is preferably 0.9 or less, more preferably 0.7 or less, particularly preferably 0.3 or less, most preferably 0.1 or less.

In cases where, in FT-IR, the peak at 1,430 $cm^{-1}$ $\pm$ 30 $cm^{-1}$ or 1,326 $cm^{-1}$ $\pm$ 25 $cm^{-1}$ is not detected or an accurate value cannot be obtained due to distortion of the baseline or effects of noise of the spectrum, this problem can be solved by using 1H nuclear magnetic resonance spectroscopy (hereinafter, referred to as "$^1$H-NMR").

In solution $^1$H-NMR, usually, a peak attributed to a dissolved chemical species is observed, while a peak of an insoluble component is not observed. When OH of PVA and Si-OH are bound via a covalent bond, the resultant is insoluble in all kinds of solvents due to the formation of a three-dimensional network structure. Accordingly, when OH of PVA and Si-OH are bound via a covalent bond, a peak attributed to 1H contained in PVA is not observed in solution $^1$H-NMR, or such a peak is observed with a lower intensity than the peak intensity expected from the amount of PVA in the composite film.

As for the form of a measurement object to be measured, since the measurement is performed in a solution mode, the measurement object is desirably in the state of a coated granular fertilizer whose fertilizer component has been separated in advance, i.e. a film in separated state or a self-standing film that is obtained under the same conditions as the production of a coated granular fertilizer. The method of separating the film and the method of producing the self-standing film are the same as described above for FT-IR. The method of separating the film is not particularly limited, and a method of machining the film or a method of putting a coated fertilizer into water to dissolve its fertilizer component and subsequently washing and drying the resultant may be employed. The machining is a method of recovering a film by scraping the surface of a coated granular fertilizer using a sharp knife or the like. In the other method, a coated granular fertilizer is put into water to dissolve its fertilizer component, and only a film is recovered. In this process, the water may be heated so as to improve the elution efficiency. The temperature of water dissolving urea may be any temperature that does not affect the amount of Si-O-C bonds in the film and, from the standpoint of efficiency and workability, it is preferably about 20 to 60°C.

By controlling the temperature of water in this range, the effects on the amount of Si-O-C bonds in the film can be reduced. The separated film is preferably washed with water so as to remove residual fertilizer component. The separated film is usually washed with water; however, it may be washed with an organic solvent. Examples of the organic solvent include alcohol, acetone, and aliphatic hydrocarbons such as heptane, and the organic solvent is not particularly limited as long as it is capable of washing off the fertilizer component. These solvents can also be used in combination by mixing. The amount of the solvent(s) to be used for the washing is not limited, and it is preferably such an amount that a spectrum attributed to the fertilizer component is not detected at the time of the measurement.

After the washing, the film is preferably dried so as to remove water therefrom. The drying temperature is not particularly limited as long as it does not affect the amount of Si-O-C bonds in the film and water can be removed from the film; however, the drying temperature is preferably about 60 to 80°C.

A deuterated solvent used in the measurement by $^1$H-NMR is not particularly limited as long as the composite film is soluble therein; however, a non-proton-donating deuterated dimethyl sulfoxide solvent is usually used. By using this solvent, the measurement can be performed without an overlap with a spectral peak derived from the film. As for the ratio between the measurement object and the deuterated solvent, 1,900% by weight of the deuterated solvent is used with respect to 100% by weight of the composite film. Since integration and normalization are performed later, the weight determined by this sampling is important, and it is preferably as uniform as possible.

In the measurement by $^1$H-NMR, the resulting spectrum is preferably integrated. This is because the noise of the resulting spectrum is reduced by performing integration, so that a smoother and more accurate spectrum can be obtained. The integration is usually performed for a number of 2 to the power of n. The number of integrations is not particularly limited, and a greater number of integrations can yield a more accurate spectrum but has a problem of requiring a longer time for the measurement; therefore, it is important to specify an appropriate number of integrations in accordance with the situation. The number of integrations is preferably 2 or more and 128 or less, more preferably 4 or more and 128 or less, most preferably 8 or more and 128 or less.

In the measurement by $^1$H-NMR, in order to improve the measurement accuracy, it is necessary to set a waiting time for the next pulse irradiation (relaxation delay; hereinafter, referred to as "RD"). Magnetization needs to be restored

to a thermal equilibrium state after excitation, and the next pulse irradiation at an early timing causes the subsequent measurement to start without a thermal equilibrium state being sufficiently restored; therefore, it is desired to set an appropriate waiting time. The waiting time is usually 5 seconds; however, it may be longer for obtaining a more accurate spectrum.

For integration and normalization of a peak attributed to OH of PVA, it is necessary to add a reference substance at the time of preparing a measurement sample. It is required that the reference substance do not yield a spectrum overlapping with those of the composite film and the raw materials of the composite film and be dissolved in the deuterated solvent being used, and the reference substance is more preferably nonvolatile. Examples of such a reference substance include *N,N*-dimethylformamide (DMF), benzene, benzaldehyde, acetonitrile, chloroform, diethyl ether, methyl ethyl ketone (MEK), heptane, hexane, 2-propanol, pyrrole, toluene, triethylamine (TEA), dimethylacetamide, grease, hexamethylbenzene (HMB), imidazole, hexamethylphosphoric triamide, and pyridine.

The integral value of a signal attributed to OH groups of the PVA contained in the composite film is preferably 50% or less, more preferably 40% or less, particularly preferably 30% or less, most preferably 20% or less, with respect to the integral value of a signal attributed to OH groups of a PVA by itself that has the same mass as the PVA contained in the composite film. When the integral value is in this range, rapid elution of the coated granular fertilizer can be inhibited.

As a method of verifying whether or not Si-O-C bonds are generated, a method of immersing the film in a solvent, taking out the film after a certain period, and then evaporating the solvent used for the immersion may be employed. The solvent is not limited as long as a resin not reacting with a hydrolysate of the alkoxysilane condensate (this resin is hereinafter referred to as "unreacted OH group-containing resin") dissolves therein and, for example, when a PVA is used, unreacted PVA dissolves in water. On the other hand, when the PVA reacts with a hydrolysate of the alkoxysilane condensate and Si-O-C bonds are thereby generated, the film no longer dissolves in water even when immersed in water. Accordingly, the presence of an unreacted OH group-containing resin can be verified by removing the immersed film from the solvent, transferring this film to an evaporating dish or the like whose weight has been measured in advance, evaporating the solvent to dryness with heating, and then determining the weight difference.

As a method of verifying the presence of an unreacted OH group-containing resin, a method of immersing a material, which has been made into a film on a substrate, in water together with the substrate, or a method of immersing a self-standing film in water using a petri dish or the like, which self-standing film is prepared under the same drying conditions as the material made into a film on the substrate, may be employed and, in the case of a coated granular fertilizer produced using a coating material, a method of checking its film alone in a separated state after, for example, removing a fertilizer component to avoid contamination therewith, may be employed.

The solvent used for immersing the film is not particularly limited as long as the OH group-containing resin dissolves therein; however, when the OH group-containing resin is a PVA, the solvent is preferably water since the PVA readily dissolves therein. The amount of the solvent to be used is not particularly specified as long as the film is completely immersed in the solvent and the unreacted OH group-containing resin is eluted from the film. The duration of immersing the film in the solvent is also not particularly specified; however, since the unreacted OH group-containing resin may not be sufficiently eluted into the solvent when the immersion time is short, the film is preferably immersed in the solvent for at least 30 minutes. In this process, the resulting solution may be stirred and/or heated for improving the working efficiency. The temperature at which the unreacted OH group-containing resin contained in the film is dissolved may be any temperature that is not higher than the boiling point of the solvent being used and does not affect the generation of Si-O-C bonds in the film and, from the standpoint of workability and efficiency, it is preferably 20 to 60°C.

Once the unreacted OH group-containing resin contained in the film is dissolved in the solvent, the film not being dissolved in the solvent is removed. As a method of this film removal, any method may be employed as long as it does not leave the undissolved film in the solvent, and examples thereof include: a method of removing the undissolved film using forceps or the like; a method of extracting the resulting solution using a syringe and subsequently attaching a syringe filter to separate the solution and the remaining film; and a method of separating the undissolved film from the solvent dissolving the unreacted OH group-containing resin by suction filtration.

The solvent dissolving the unreacted OH group-containing resin is evaporated to dryness, and the weight of the unreacted OH group-containing resin is determined by subtracting the weight of a container from a total weight of the unreacted OH group-containing resin and the container after the evaporation to dryness. In this process, the container used for the evaporation to dryness is not particularly specified; however, from the standpoint of efficiency, it is, for example, a watch glass or a magnetic crucible. In order to completely remove the solvent from the container into which the solvent dissolving the unreacted OH group-containing resin is put, it is necessary to apply heat thereto, and a method thereof is not particularly specified as long as heat can be applied to the container. The temperature thereof is preferably a temperature at which the solvent is evaporated and the OH group-containing resin is not decomposed. From the standpoint of workability and efficiency, the temperature is preferably 120°C or lower. The amount of the OH group-containing resin not reacting with a hydrolysate of the alkoxysilane condensate that is obtained by evaporation of water to dryness is preferably 50 parts by mass or less with respect to 100 parts by weight of the initially immersed film. In this range, it is seen that a sufficient amount of Si-O-C bonds exist in the film.

From the standpoint of the ease of obtaining a fertilizer coating material that yields a film having a low moisture permeability, a ratio of the weight of the above-described dehydration-condensation product with respect to a total weight of the fertilizer coating material is usually 50% by weight or higher, preferably 55% by weight or higher, more preferably 60% by weight or higher, still more preferably 65% by weight or higher, yet still more preferably 70% by weight or higher, but may be 100% by weight, 100% by weight or lower, 95% by weight or lower, 90% by weight or lower, or 80% by weight or lower.

(Regarding Coated Granular Fertilizer)

In the coated granular fertilizer according to the present embodiment, a granular fertilizer that can be used as a core material usually contains at least one of nitrogen, phosphoric acid, and potassium as a fertilizer component, and specific examples of the granular fertilizer include nitrogenous fertilizers, phosphatic fertilizers, potash fertilizers, and fertilizers containing, as required, a trace element that is a plant essential element, such as calcium, magnesium, sulfur, iron, manganese, molybdenum, copper, zinc, or boron, or silicon. The granular fertilizer may be a fertilizer that contains a nitrification inhibitor, a urease inhibitor, a pesticidal component, or the like. Among these fertilizers, a fertilizer that has a high water solubility and is readily discharged into the environment, such as a nitrogenous fertilizer containing ammonium sulfate, urea, ammonium nitrate or the like, a potash fertilizer containing potassium sulfate, potassium chloride or the like, or a compound fertilizer containing urea, ammoniac nitrogen, or nitrate nitrogen is preferred, and urea having a low unit price per fertilizer component is more preferred.

The amount of a film formed of the fertilizer coating material in the above-described coated granular fertilizer (hereinafter, this film is also simply referred to as "fertilizer coating material film") is not particularly limited; however, from the standpoint of reducing film defects, it is usually not less than 1% by mass, preferably not less than 2% by mass, more preferably not less than 3% by mass, and usually 30% by mass or less in 100% by mass of the coated granular fertilizer and, from the standpoint of increasing the amount of fertilizer active ingredient, the amount of the film is preferably 20% by mass or less, more preferably 15% by mass or less, still more preferably 10% by mass or less.

(Precoating)

As the core material, a precoated core material can be used. In other words, in the coated granular fertilizer, a precoat layer (film) may be further arranged between the fertilizer and the fertilizer coating material film. Examples of a precoating material include waxes, nitrification inhibitors, urease inhibitors, biodegradable resins, inorganic particles having an anti-caking function, surfactants, and formaldehyde.

By using a precoated core material, dissolution, adhesion, and the like of the core material at the time of coating can be inhibited, so that stable coating can be achieved.

A biodegradable resin used as a precoating material is not particularly limited; however, it is selected from the group consisting of polyvinyl alcohol resins, starch, cellulose, lignin, chitin, chitosan, PBS (polybutylene succinate), PBSA (polybutylene succinate adipate), PBAT (polybutylene adipate terephthalate), PCL (polycaprolactone), starch polyester, cellulose acetate, PHB (polyhydroxybutyrate), PHBH (poly(3-hydroxybutyrate-co-3-hydroxyhexanoate)), PHBV (poly(3-hydroxybutyrate-co-3-hydroxyvalerate)), PLA (polylactic acid), PGA (polyglycolic acid), PDO (polydioxanone), and copolymers thereof. These biodegradable resins may be used singly, or in combination of two or more kinds thereof by mixing.

A wax used as a precoating material is also not particularly limited, and examples thereof include: natural waxes, for example, vegetable waxes such as castor oil, animal waxes, mineral waxes, and petroleum waxes; synthetic waxes, such as polyethylene waxes and Fischer-Tropsch waxes; compound waxes obtained by processing the above-exemplified waxes; oxidized waxes; and hydrogenated waxes such as castor wax. These waxes may be used singly, or as a mixture of two or more kinds thereof.

The amount of the precoat layer that is calculated by the below-described equation is not particularly limited; however, it is usually 0.1% by weight or more and 20% by weight or less with respect to the amount of the core material. From the standpoint of inhibiting the generation of defects in the precoat layer, the amount of the precoat layer is preferably 1% by weight or more and 20% by weight or less and, from the standpoint of the fertilizer active ingredient, the smaller the film thickness, the more preferred it is, and the amount of the precoat layer is preferably 2% by weight or more and 15% by weight or less, more preferably 2% by weight or more and 10% by weight or less.

$$\text{Precoat layer [\% by weight]} = (\text{Weight of precoating material/Weight of precoated core material}) \times 100$$

As described above, the granular fertilizer according to the present embodiment may be a fertilizer that contains at least one fertilizer component such as nitrogen, phosphoric acid, or potassium, and the granular fertilizer may also contain, in addition to the above-described components, a carrier such as clay, kaolin, talc, bentonite, or calcium carbonate, and/or a binder such as sodium carboxymethyl cellulose or starch, within a range that does not impair the effects of the present invention. If necessary, the granular fertilizer may further contain, for example, a surfactant such as polyoxyethylene nonylphenyl ether, a molasses, an animal oil, a vegetable oil, a hydrogenated oil, a fatty acid, a fatty acid metal salt, a paraffin, a wax, and/or glycerin.

Further, other components such as an inorganic or organic filler may be contained in the film within a range that does not impair the effects of the present invention. Examples of the filler include: plate-like fillers, such as talc, mica, and hydrotalcite; calcium carbonate; silica; clay; various pulverized ore products; and sulfur. Hereinafter, unless otherwise specified, the simple term "film" encompasses both the fertilizer coating material film and the precoat layer (film).

Examples of components other than the filler include organic substances, such as surfactants and polysaccharides and derivatives thereof. These components can be added within a range that does not affect the above-described reactions. Examples of the surfactants include: water-soluble substances, such as polyethylene glycols, polypropylene glycols, polyalkylene glycols obtained by copolymerization of ethylene glycol and propylene glycol, and polyvinyl alcohols; ether-type nonionic surfactants, such as polyethylene glycol-alkyl ethers and polyethylene glycol-branched alkyl ethers; ester-type nonionic surfactants, such as polyethylene glycol-alkyl esters and polyethylene glycol-branched alkyl esters; cationic surfactants; anionic surfactants; amphoteric surfactants; and mixtures thereof. Examples of the polysaccharides and derivatives thereof include cellulose, agar, starch, chitin and its derivatives, and chitosan and its derivatives, among which starch is inexpensive and thus preferred. As a starch, one derived from corn, tapioca, wheat, potato, rice, sweet potato, or the like can be used. Further, as a starch, a modified starch such as pregelatinized starch may be used as well. Moreover, for example, a starch whose surface has been treated with a silicone resin or the like to improve the dispersibility and the fluidity can be used as well. The above-described surfactants, polysaccharides, and derivatives thereof may be used singly, or in combination of two or more kinds thereof.

The above-described filler has a particle size of preferably 100 $\mu$m or less, more preferably 1 $\mu$m or more and 50 $\mu$m or less. When the particle size is in this range, problems caused by an excessively large particle size, such as peeling of a coating film at the time of film formation and clogging of a spray nozzle and the like with a coating material solution, are unlikely to occur. Even when the filler has a particle size greater than the thickness of the coating film and partially protrudes from the coating film surface, the expected purpose is achieved as long as the filler is in a state of being partially incorporated into and adhered to the coating film. For the measurement of the particle size, any known means, such as a laser diffraction-type particle size distribution analyzer, may be used. When the coating material contains the above-described filler, a ratio thereof is not particularly limited; however, it is preferably 0.1% 70% by mass, more preferably 1 to 60% by mass, with respect to 100% by mass of the coating material. When the coating material contains a component other than the filler, such as any of the above-described surfactants, polysaccharides, and derivatives thereof, a ratio of this component is not particularly limited; however, it is preferably 0.01 to 60% by mass, more preferably 0.1 to 50% by mass, with respect to 100% by mass of the coating material.

In addition to the above, as the coating material, a variety of organic metal compounds and metal oxides may be used for the purpose of, for example, decomposing the resin contained in the resulting coating film. Examples of the organic metal compounds that can be used include organometallic complexes and organic acid metal salts. Examples of a metal having excellent photodegradability include cobalt, iron, manganese, and cerium. From the standpoint of availability, iron complexes and iron carboxylates are preferred. Examples of the iron complexes include iron acetylacetonate and iron acetonylacetonate, as well as dialkyl dithiocarbamate, dithiophosphate, xanthate, and benzothiazole of iron. Further, examples of the iron carboxylates include iron compounds of caprylic acid, capric acid, lauric acid, myristic acid, palmitic acid, stearic acid, isostearic acid, behenic acid, oleic acid, linoleic acid, linolenic acid, and the like. Examples of the metal oxides include titanium oxide and zinc oxide. These materials may be added individually, or in combination of two or more kinds thereof. A content ratio of an organic metal compound in the coating material is preferably 0.0001 to 1% by mass, more preferably 0.001 to 0.5% by mass. When the content ratio is in this range, disintegration or decomposition of the coating film is unlikely to occur during product storage, and expected effects are likely to be obtained when the coating film is applied. In addition, other biodegradation accelerator or inhibitor can be added as well.

Methods of obtaining the fertilizer coating material and the coated granular fertilizer according to the present embodiment are not particularly limited, and the fertilizer coating material and the coated granular fertilizer can be obtained by, for example, the below-described respective methods. In the below, a PVA-based resin is used for description. A PVA-based resin is one example of most preferred resin in the present embodiment; however, in the constitution of the present embodiment, a resin is not particularly limited as long as it is an OH group-containing resin. For example, starch, chitosan, cellulose derivatives, and the like can be applied. In the below, the fertilizer to be coated is urea granules. Urea is most appropriate in the present embodiment; however, in the constitution of the present embodiment, the fertilizer is not limited to urea, and any known granular chemical fertilizer can be used. Examples thereof include: urea; aldehyde-condensed ureas, such as formaldehyde-condensed urea and isobutylaldehyde-condensed urea; guanyl urea sulfate; lime nitrogen; ammonium compounds, such as ammonium nitrate, ammonium sulfate, ammonium chloride, and ammonium dihydrogen phosphate; phosphatic fertilizers, such as calcium superphosphate, fused phosphate fertilizer, and calcined phosphate fertilizer; potassium salts, such as potassium nitrate, potassium chloride, potassium sulfate, and potassium silicate; calcium salts, such as calcium phosphate, calcium sulfate, calcium nitrate, and calcium chloride; magnesium salts, such as magnesium nitrate, magnesium chloride, magnesium sulfate, and magnesium phosphate; iron salts, such as ferrous nitrate, ferric nitrate, ferrous phosphate, ferric phosphate, ferrous sulfate, ferric sulfate, ferrous hydrochloride, and ferric hydrochloride; double salts of these compounds; and complexes of two or more of these compounds.

In the present specification, the types and the weights of a structure derived from an OH group-containing resin, a structure derived from an alkoxysilane condensate, and a structure derived from other component in a fertilizer coating material can be analyzed by, for example, $^1$H-NMR, GPC, or IR, and they may be specified from the types and the added amounts of raw materials.

The preparation of a solution of an OH group-containing resin and a hydrolysate solution of an alkoxysilane condensate in the formation of a fertilizer coating material composed of the OH group-containing resin and a hydrolysis-condensation product of the alkoxysilane condensate, as well as a method of producing a coating film using a composite liquid obtained by combining these solutions will now be described in detail. In one example, a fertilizer coating material is obtained through the below-described steps 1) to 5). It is noted here that a PVA is described below as the OH group-containing resin; however, it is merely an example, and the OH group-containing resin is not limited thereto.

1) Preparation of Hydrolysate Solution (A) of Alkoxysilane Condensate;
2) Preparation of OH Group-Containing Resin (e.g., PVA-based Resin) Solution (B);
3) Mixing of (A) and (B);
4) Self-Standing Film or the film Coating on Substrate; and
5) Heat-Drying

In the case of applying the above-described precoating, the precoating step is provided prior to the 4) coating step.

1) Preparation of Hydrolysate Solution (A) of Alkoxysilane Condensate

In this step, in the presence or absence of a solvent, an alkoxysilane condensate is mixed with a catalyst and water and thereby hydrolyzed to obtain a liquid hydrolysate composition that can be diluted with water or an organic solvent as desired.

As the solvent, an aliphatic lower alcohol having 1 to 4 carbon atoms, such as methanol, ethanol, or propanol, is usually used, and methanol or ethanol, which is highly compatible with water and is unlikely to cause PVA to precipitate even when mixed with an aqueous PVA-based resin solution, is particularly preferred. The alkoxysilane condensate and the hydrolysis water are not compatible with each other when they are mixed in the absence of a solvent; however, since the added water is consumed as the hydrolysis proceeds and a corresponding alcohol is consequently generated, a homogeneous and transparent composition can be eventually obtained even in the absence of a solvent when the amount of the added water is small. The amount of the solvent to be used is preferably 0.25 to 250 parts by weight with respect to 20 parts by weight of the resulting hydrolyzed alkoxysilane contained in the (A) in terms of $SiO_2$. The amount of the solvent can be modified as appropriate in accordance with the solid concentration, the type of the solvent, and the ratio of the solvent. Subsequently, as required, the resultant may be diluted with water or an organic solvent such as an alcohol to a desired concentration.

In order to hydrolyze the alkoxysilane condensate at the time of preparing the aqueous solution (A), a catalyst and water are used.

Examples of the catalyst usually include: inorganic acid catalysts, such as hydrochloric acid, sulfuric acid, nitric acid, and hydrofluoric acid; organic acid catalysts, such as formic acid, acetic acid, maleic acid, fumaric acid, and *p*-toluenesulfonic acid; base catalysts, such as ammonia; organic metals; metal alkoxides; organotin compounds; metal chelate compounds containing any one of metals such as aluminum, titanium, and zirconium; and boron compounds. From the standpoint of allowing the resulting hydrolysate to contain a large number of silanol groups and have a high affinity for PVA-based resin and allowing the aqueous solution (A) to have excellent storage stability by making it unlikely to be gelled in a short time, the catalyst is preferably, for example, an acid catalyst, an organic metal, a metal alkoxide, a metal chelate compound, or a boron compound.

The amount of the catalyst is usually 0.0001% by mole or more and 0.1% by mole or less, preferably 0.0002% by mole or more and 0.09% by mole or less, particularly preferably 0.0003% by mole or more and 0.8% by mole or less, with respect to a total molar amount of alkoxy groups in the alkoxysilane condensate. By using the catalyst in such an

amount, the hydrolysis reaction proceeds at an appropriate rate, and the storage stability of the aqueous solution (A) is improved.

Further, the amount of water used in the preparation of the aqueous solution (A) is usually 0.01% by mole or more, or 0.05% by mole or more, but preferably 80% by mole or less, with respect to a total molar amount of alkoxy groups in the alkoxysilane and/or condensate thereof. By using water in such an amount, the progress of the hydrolysis reaction is facilitated, and the aqueous solution (A) is made likely to be homogeneously dissolved with water when diluted with water. Moreover, in the production of a desired film, the resulting film is prevented from being porous, and the drying thereof does not require unnecessary heat. Usually, a mixture of the catalyst and water is added to the alkoxysilane condensate at once, however, the catalyst and water may be added separately as well.

In the preparation of the solution (A), the hydrolysis reaction of the alkoxysilane condensate is usually performed at 10°C to 80°C. When this temperature is excessively high, the hydrolysis reaction rate is high and the solution (A) is likely to be gelled, whereas an excessively low temperature tends to make the reaction less likely to proceed. The reaction is usually performed with stirring.

The reaction time varies depending on the scale, however, it is usually 5 minutes to 24 hours, preferably 10 minutes to 8 hours. By setting the reaction time in this range, the aqueous solution (A) is made unlikely to have a high viscosity or be gelled and the reaction is prevented from being insufficient, so that the aqueous solution (A) and the aqueous solution (B) are easily transparently dissolved together.

The concentration of the hydrolysate of the alkoxysilane condensate in the solution (A) can be selected as appropriate in accordance with the storage stability of the solution (A) and the compatibility with the below-described solution (B). The concentration of the hydrolysate of the alkoxysilane condensate in the solution (A) is expressed in terms of solid concentration using a $SiO_2$ equivalency, and it is usually 0.1% by weight or more and 40% by weight or less, preferably 1% by weight or more and 30% by weight or less, more preferably 5% by weight or more and 25% by weight or less.

2) Preparation of OH Group-Containing Resin Solution (B)

In this step, an OH group-containing resin is added to water, a mixed solution of water and an water-soluble organic solvent, a water-insoluble organic solvent, or a mixed organic solvent of two or more kinds of organic solvents, with stirring in a heated state as required, whereby the resin is dissolved in the solvent to prepare a solution (B) of the OH group-containing resin. Although depending on the required solid concentration of the resin and the corresponding physical properties of the solvent, for example, when a PVA resin is dissolved in water, the temperature of this water is 10°C or higher and 100°C or lower, particularly preferably 25°C oe higher and 90°C or lower. This range is selected as appropriate in accordance with the dissolution characteristics of the solvent. The OH group-containing resin may be added at once or in portions. After the completion of the addition, in order to inhibit lump formation and completely dissolve the OH group-containing resin, the resulting solution may be heated as required. The solution may be heated immediately after the addition; however, lump formation is more likely to be inhibited by stirring the solution at room temperature for a certain period before heating. The term "room temperature" used herein refers to a range of 25 ± 5°C. The duration of the stirring at room temperature is not particularly specified; however, it is usually 1 hour or more and 3 hours or less, more preferably 20 minutes or more and 40 minutes or less, particularly preferably 10 minutes or more and 15 minutes or less, and selected as appropriate in accordance with the properties of the OH group-containing resin being used. The OH group-containing resin may be added with heating as well.

The concentration of the solution (B) can be selected as appropriate in accordance with the viscosity of the solution (B), the dissolution characteristics of the resin being used, and the compatibility of the solution (B) with the solution (A), and it is usually 1% by weight or more and 30% by weight or less, preferably 2% by weight or more and 25% by weight or less. A solvent of the solution (B) is not particularly specified as long as it dissolves the OH group-containing resin and, when mixed with the hydrolysate of the alkoxysilane condensate, the hydrolysate of the alkoxysilane condensate dissolves therein without precipitation of the OH group-containing resin. Other than water, depending on the dissolution properties of these materials, an organic solvent such as a lower alcohol having 1 to 3 carbon atoms or acetone may be used, or two or more kinds of solvents may be used in combination. By this, when the two solutions are mixed, a composite liquid is obtained in a state where the hydrolysate of the alkoxysilane condensate is dissolved therein without precipitation of the OH group-containing resin.

3) Mixing of (A) and (B)

In this step, the solutions (A) and (B) prepared by the above-described respective methods are mixed to obtain a homogeneous solution. This mixing may be performed by adding the solutions (A) and (B) dropwise or at once.

When water is used in the solution (B) and the alkoxysilane condensate of the solution (A) is in a partially hydrolyzed state, the water in the solution (B) is partially utilized for hydrolysis of the silicate component at the time of

mixing the solution (A) and the solution (B), and hydrolysis and polycondensation further proceed. After the mixing of the aqueous solution (A) and the aqueous solution (B), as required, the resulting mixture is aged for 10 minutes to 24 hours at room temperature or with heating at a temperature of not higher than the boiling point of the mixture, whereby a homogeneous aqueous solution is obtained. By this, deterioration of the compatibility between the OH group-containing resin and the solvent, which is caused by an increase in the molecular weight of a hydrolysis-polycondensation product of the alkoxysilane condensate due to excessive the condensation reaction, is prevented.

4) Preparation of Self-Supporting Film or Coating of Substrate

In this step, the solutions obtained in the previous step are used as a coating liquid, and a self-supporting film or a substrate such as a plastic film is coated with the coating liquid. A method of forming a coating film is not particularly limited, and any conventionally known technology may be selected as appropriate.

The self-supporting film is prepared by, for example, a method of uniformly spreading a coating liquid, which is obtained by mixing the solutions (A) and (B), on a petri dish or the like over an area required for evaluation, drying the coating liquid for a certain period under arbitrary temperature and humidity conditions, and subsequently peeling off the resulting film from the petri dish or the like; or a method of coating a plastic film or the like coated with a release agent, drying the resultant for a certain period under arbitrary temperature and humidity conditions, and subsequently peeling off the resulting film from the plastic film or the like. With regard to a coating method, coating of a substrate such as a plastic film will be described.

In cases where it is difficult to prepare a self-supporting film, a film may be prepared by using a plastic film as a substrate. A composite liquid has a low solid content; therefore, even when dried by a coating method, it can yield a favorable film that is not broken. A composite film is mainly formed by a wet film forming method. Specific examples thereof include a spray coating method, a roller coating method, a bar coating method, a spin coating method, a gravure coating method, a die coating method, an ink-jet method, a dispenser method, a comma coating method, a curtain coating method, a dip coating method, and methods using various means such as silk screen printing and flexographic printing. Any of the above-exemplified methods can be selected as appropriate in accordance with the thickness of the resulting film as well as the viscosity and the solid content of a coating liquid. In the present specification, a spin coating method or a bar coating method is employed depending on the properties of the substrate to be used.

The "spin coating method" refers to a method of applying a coating liquid to the surface of a substrate to be coated by rotary processing. The substrate to be coated is immobilized by a vacuum chuck or the like on a stage of a spin coater, and the coating liquid is added to the center of the subject substrate, after which the substrate is rotated for a certain period at a constant rotation speed and thereby coated. The thickness of a film coated onto the substrate is dependent on not only the parameters such as the kinetic viscosity and the surface tension of the coating liquid but also the rotation speed of the spin coater; therefore, the film can be formed at a wide range of thickness in accordance with the intended purpose. Accordingly, the rotation speed is determined based on the properties of a composition liquid to be evaluated. The rotation time may be set such that the coating liquid is spread over the entire substrate. The spreading rate of the coating liquid is affected by, for example, the rotation speed, the kinetic viscosity of the coating liquid, and the wettability of the substrate with the coating liquid; therefore, it is determined based on the properties of the coating liquid to be evaluated and the rotation speed.

Depending on the resin constituting the substrate, there are cases where, for example, the substrate cannot be immobilized on a stage of a spin coater due to the flexibility and the like of the resin itself, and it is thus difficult to employ a spin coating method. In addition, there are cases where the resulting film does not have an intended thickness even when the rotation speed and the composition of the coating liquid are taken into consideration. In these cases, a bar coating method can be employed.

The "bar coating method" refers to a coating method that uses a shaft called bar coater. One example of a general bar coater is a so-called wire bar in which a wire is wound on a shaft. The coating principle of a wire bar is that, when the wire bar in a state of being covered with a coating liquid is pulled, the coating liquid in the gaps between wires is left on a substrate, and the substrate is thereby coated. The liquid applied onto the substrate flows and levels off to form a uniform film. The thickness of the resulting film can be controlled by adjusting not only the kinetic viscosity and the like of the coating liquid but also the thickness of the wire wound on the shaft. Since the bar coating method can yield a thicker film than a spin coating method, an appropriate shaft is selected based on the properties of the coating liquid to be evaluated and the evaluation items. In recent years, a non-wire bar in which a shaft itself is uniformly embossed without a wire being wound thereon has been used. The absence of using a wire is advantageous in that there is no wire breakage or wire displacement, and the bar is easy to wash after coating.

The substrate is not particularly limited, and any of a piece of paper, a nonwoven fabric, and a plastic film made of polyethylene, polyethylene terephthalate (PET), polyethylene naphthalate, polyether sulfone, polypropylene, polyimide, polycarbonate, polybutylene succinate, cellulose triacetate, or the like can be used. Among these substrates, one having good adhesion with a dried film is selected. The surface of the substrate may be treated so as to improve the

adhesion with the film. A method of this treatment is not specified, and examples of a conventional technique include UV irradiation, etching, vapor deposition, sputtering, corona treatment, and plasma treatment. A method that improves the adhesion with the film is employed.

5) Heat-Drying

The coating film prepared on the self-supporting film or substrate may be dried by heating. By this heating, the solvent in the coating film is evaporated, and a film is formed. Further, in this process, the OH groups in the hydrolysate of the alkoxysilane condensate react with the OH group-containing resin to generate Si-O-C bonds. An apparatus used for the heating may be any apparatus as long as the solvent in the coating film can be removed and the resulting film can thereby be cured. Examples of such an apparatus include a forced circulation-type evaporator, a natural convection-type dryer, and a forced-convection constant-temperature drying oven. A required temperature may be any temperature as long as it does not affect the decomposition temperature of the film or damage the substrate, and it is usually 140°C or lower. In this case, the drying step of two or more stages performed at different temperatures may be incorporated. By this, cracking of the coating film caused by a sudden temperature change can be inhibited. The heating may be performed for any duration as long as the solvent in the coating film can be sufficiently removed, and the duration of the heating is not particularly specified since the evaporation rate at a certain temperature varies depending on the solvent; however, the heating is preferably performed for at least 15 minutes per stage.

For example, when the self-supporting film is prepared on a petri dish, drying under a rapid drying condition may cause deformation and cracking of the film; therefore, it is also possible to implement a certain humidity condition. A required humidity is set as appropriate in accordance with the above-described temperature and the solvent composition of the film, and it is usually 90% humidity or lower.

The resulting film has favorable water vapor barrier properties, and the amount of water vapor passing through the film in an environment of 25°C and 90% humidity, i.e. moisture permeability, is preferably in a range of 500 $g/m^2 \cdot day$ or more and 1,000 $g/m^2 \cdot day$ or less, more preferably in a range of 200 $g/m^2 \cdot day$ or more and 500 $g/m^2 \cdot day$ or less, particularly preferably 200 $g/m^2 \cdot day$ or less. With the moisture permeability being in this range, a sustained-release property appropriate for the intended purpose can be provided when a fertilizer is coated with the composite liquid.

<Measurement of Moisture Permeability>

As a mechanism by which a sustained-release coated fertilizer slowly releases its component in water, water turns into water vapor, comes into contact with the fertilizer by passing through its coating film, and dissolves the fertilizer, after which this water dissolving the fertilizer is released to the outside of the film, i.e. into water, by the effect of osmotic pressure. Thus, a measured value of the moisture permeability of the film is closely related to the elution rate of the sustained-release coated fertilizer. Accordingly, the elution rate of the sustained-release coated fertilizer can be estimated before the production of the fertilizer by checking the moisture permeability of its film. The moisture permeability can be evaluated by the method prescribed in JIS Z0208 and, in this method, the evaluation can be performed at 25°C and 90%RH in accordance with the actual use conditions.

<Production of Coated Granular Fertilizer>

A method of producing the coated granular fertilizer according to another embodiment of the present invention is not particularly limited, and the coated granular fertilizer can be produced by, for example, a method that includes the steps of: mixing a solution containing an alkoxysilane condensate with a solution containing an OH group-containing resin; spraying the resulting coating liquid to a fertilizer; and drying the resultant.

As a method of mixing the solution containing an alkoxysilane condensate with the solution containing an OH group-containing resin, the above-described steps from "1) Preparation of Hydrolysate Solution (A) of Alkoxysilane Condensate" to "3) Mixing of (A) and (B)" can be applied in the same manner. Accordingly, as a coating liquid obtained by this mixing, a composite liquid used for the above-described evaluation of a moisture permeability measurement can be used.

A method of spraying the thus obtained coating liquid to a fertilizer is not particularly limited, and examples thereof include: a method of spraying the coating liquid obtained by mixing the aqueous solutions (A) and (B) to the surfaces of the particles; and a method of immersing the particles in the coating liquid. Further, the aqueous solutions (A) and (B) may be directly sprayed to the particles simultaneously or separately and then mixed on the surfaces of the particles. The coating uniformity is further improved by instantaneously drying the solvents; therefore, a spraying method is preferred.

For the spraying, a one-fluid or two-fluid spray is used and, particularly, a two-fluid spray nozzle which has a small spray particle size and can form a film more uniformly is preferred. Further, as an apparatus, for example, a coating

apparatus of a rotary drum type, an aerated rotary drum type, a rotary pan type, or a rotary drop feeder type, which apparatus stirs a granular material in association with the movement of the apparatus itself, or a coating apparatus of a jet type or a fluid type, which stirs a granular material with an gas flow, can be used.

A method that uses, among such apparatuses, a small fluid-type spray coater 10 illustrated in FIG. 1 will now be described.

In this method, urea is used as a material to be coated. Urea particles 3 are loaded into the spray coater 10. By loading an appropriate amount of the urea particles, a coating liquid is likely to be uniformly applied to the loaded urea particles, so that a particle aggregate is unlikely to be generated.

Next, a blowing gas 4 is introduced from a lower part of the apparatus to blow up the urea. When the amount of the gas is small, a fluid state of the urea cannot be maintained, and particle aggregates are thus likely to be generated. When the amount of the gas is large, the urea is discharged to the outside of the coater. Once the inside of the coater reached a prescribed temperature, a spray gas and a coating liquid are sprayed from a spray gun 1, which is arranged on top, through a nozzle 2, whereby the urea 3 is coated with the coating liquid. In order to accelerate drying of the thus coated urea by the blowing gas 4 introduced from the lower part of the apparatus, the inside of the coater is usually heated to 40 to 130°C. Examples of the gas used for blowing the urea include air, nitrogen, carbon dioxide, argon, and helium.

The coating liquid is introduced using a liquid feed pump. When the liquid feed rate is excessively high, since the coating liquid is introduced before the resulting coating film is dried, the urea particles are likely to adhere with each other and generate particle aggregates, while when the liquid feed rate is excessively low, since the coating liquid is dried in the coater before being coated to the urea, a coated fertilizer cannot be obtained. Examples of the gas sprayed together with the coating liquid include air, nitrogen, carbon dioxide, argon, and helium. In a case where the coating liquid contains an organic solvent, since there is a risk of ignition, it is preferred to use, for example, an inert gas such as nitrogen or helium. The spray time is not limited as long as the effects of the present invention are not impaired; however, it is usually 5 to 120 minutes.

A method of drying the coating liquid sprayed to the fertilizer is not particularly limited and, for example, the coating liquid may be subjected to a drying treatment and, specifically, the coating liquid may be air-dried or dried by heating. When a heat treatment is applied, it may be performed as the drying treatment, or may be performed as another treatment after the drying treatment.

The conditions of the heat treatment are not particularly limited and, for example, the conditions of the above-described "5) Heat-Drying" can be applied. It is noted here, however, since the evaluated coating film and the film coating the granular fertilizer are different in thickness and shape, the heating conditions such as temperature do not always need to be standardized. Usually, the heat treatment is performed at 140°C or lower. Heating is preferably performed at a temperature not higher than the melting point of the fertilizer component to be coated and, when urea is coated, heating is preferably performed at 130°C or lower, more preferably at 90°C or lower. Further, the heating treatment may be performed in two or more stages at different temperatures and, for example, the first stage may be performed at 90°C or lower, while the second stage may be performed at 91°C or higher and 130°C or lower.

The coverage of the fertilizer coating material film on the coated granular fertilizer varies depending on the shape and the size of the core material; however, it is preferably 1 to 20% by weight, particularly preferably 2% by weight to 15% by weight, more preferably 2% by weight to 10% by weight. The term "coverage" used herein is defined as a ratio of the coating material (material of fertilizer coating material film) with respect to the coated granular fertilizer, and the coverage is calculated by the following equation:

$$\text{Coverage [\% by weight]} = (\text{Weight of coating material/Weight of coated granular fertilizer}) \times 100$$

Further, the Si content in the fertilizer coating material film is, in terms of $SiO_2$, preferably not less than 20% by weight, more preferably not less than 40% by weight, still more preferably not less than 50% by weight, and preferably less than 95% by weight, more preferably 93% by weight or less. When the Si content is in this range, the coating film is unlikely to crack, so that the elution of the fertilizer can be further inhibited. When the Si content is in this range, the coating film is unlikely to crack, so that the elution of the fertilizer can be further inhibited.

The coated granular fertilizer may be in the form of particles, and has an average particle size of 1.0 mm or more and 10.0 mm or less, preferably 1.0 mm or more and 5.0 mm or less. By using a sieve, particles of any size can be selected within the above-described range.

Further, from the standpoint of stably controlling the release rate, it is more preferred that the coated granular fertilizer be nearly spherical. Specifically, the coated granular fertilizer has a spherical shape with a circularity coefficient, which is determined by the equation below, of preferably 0.7 or higher, more preferably 0.75 or higher, still more preferably

0.8 or higher. The maximum value of the circularity coefficient is 1, and the particle shape gets closer to being a perfect circle as the circularity coefficient approaches to 1, while the circularity coefficient get smaller as the particle shape deviates from a perfect circle.

$$\text{Circularity coefficient} = \{(4\pi \times \text{Projected area of particle})/(\text{Outline length of particle in projection view})^2\}$$

B) Precoating

This step is incorporated in the case of performing precoating, and a method thereof is not particularly limited. The surface of the granular fertilizer is coated with above-described precoating material prior to the above-described coating step. The precoating can be performed using, for example, a coater 20 illustrated in FIG. 2. Specifically, in the coater 20 illustrated in FIG. 2, a granular fertilizer (core material, particles) 23 is put into a fluidized bed 21 and, using a hot air 26 that is generated by a blower 24 and passed through a heater 25, a blowing gas is circulated to the fluidized bed 21. The temperature inside the fluidized bed 21 is set at a desired value and, once the temperature is confirmed to have reached a target value, a spray solution 29 in which a precoating material (a material of a precoat film) is dissolved in a solvent is fed from a dissolution tank 28, and this solution is sprayed to a core material 23 from a two-fluid spray nozzle 22 to perform precoating. The above-described blowing gas is generated by feeding the hot air 26, which is generated by the blower 24 and heated through the heater 25, to the fluidized bed 21. This blowing gas is discharged from an exhaust 27. Thereafter, the feed of the solution is stopped and the fertilizer is then dried at a constant temperature, after which the temperature inside the fluidized bed is lowered, the blowing gas is subsequently stopped, and the thus precoated fertilizer is recovered.

The post-precoating drying temperature is not particularly limited; however, from the standpoint of the drying efficiency, it is usually 30°C or higher, preferably 60°C or higher. Meanwhile, the post-precoating drying temperature is usually 140°C or lower and, from the standpoint of the melting point of urea, it is preferably 130°C or lower.

The coated granular fertilizer exhibits preferred sustained-release properties and, when immersed in 30°C water, its fertilizer component has a reduced elution rate of 60% or less after 24 hours. This elution rate is preferably 50% by weight or less, which satisfies the official standard of slow-release fertilizers, and it is more preferably 10% by weight or less.

Further, when the coated granular fertilizer is immersed in water, the initial number of floating particles is preferably 20% or less, more preferably 10% or less. The elution test and the initial number of floating particles can be determined in the following manner.

<Measurement of Elution Rate>

In a 250-mL container, 1 g of coated urea and 200 mL of pure water are added. This container is left to stand in an incubator at a constant temperature (30°C) and, after 24 hours, the urea nitrogen concentration in water is measured. The measurement of urea concentration is performed as follows. First, 50 mL of hydrochloric acid, 250 mL of ethanol, and 700 mL of pure water are mixed, and 2.5 g of *p*-dimethylaminobenzaldehyde is dissolved in the resulting mixture to prepare a reaction solution. Subsequently, 6 mL of this reaction solution is mixed with 0.5 mL of a urea eluate, and the resultant is left to stand for 30 minutes, after which the absorbance at 420 nm is measured using a spectrophotometer. A calibration curve is prepared using aqueous urea solutions each having a known concentration, and the urea concentration is determined from the absorbance.

<Measurement of Initial Number of Floating Particles>

Twenty particles of coated urea are placed in a petri dish, and pure water is poured thereto along the wall of the petri dish at a rate of 10 mL/min. After 50 mL of pure water is poured, the number of particles floating on the water surface is measured.

$$\text{Floating rate (\%)} = \text{Number of floating particles}/\text{Number of tested particles} \times 100$$

<Method of Measuring Coverage>

Coated urea in an amount of 5 g was pulverized using a mortar and placed in a 500-mL volumetric flask. Pure

water was added thereto up to a marked line, and this volumetric flask was left to stand in an incubator at 30°C until urea was completely dissolved. Thereafter, the resulting liquid is filtered through a filter having a mesh size of 45 μm, and the concentration of urea nitrogen is measured by the above-described method of <Measurement of Elution Rate>. The coverage is calculated from the weight of urea contained in 5 g of the coated urea using the following equation:

$$\text{Coverage [\% by weight]} = ((\text{Weight of coated granular fertilizer - Weight of urea})/\text{Weight of coated granular fertilizer}) \times 100$$

The value of (Weight of coated granular fertilizer - Weight of urea) means the weight of a coating material.

EXAMPLES

The present invention will now be described in detail by way of Examples; however, the present invention is not limited to the below-described Examples within the gist of the present invention.

(Apparatus)

Coating of a fertilizer was performed by spray coating using the small fluidized bed coater illustrated in FIG. 1.

(Raw Materials)

The raw materials used in Examples and Comparative Examples are described below.

(Alkoxysilane Condensate)

MS-51 (manufactured by Mitsubishi Chemical Corporation): a compound represented by Formula (2) wherein R is a methyl group, which is a pentamer on average and has a weight-average molecular weight of 800 to 1,000.

(OH Group-Containing Resins)

PVAs: As PVAs, a modified PVA and unmodified PVAs were used. These PVAs had an average polymerization degree of 400 to 500 and a saponification degree in a range of 39.0% by mole or more and 100% by mole or less.

As the unmodified PVAs, NK-05R (manufactured by Mitsubishi Chemical Corporation) having a saponification degree of 71.0 to 75.0% by mole and an estimated average polymerization degree of 500, GL-03 (manufactured by Mitsubishi Chemical Corporation) having a saponification degree of 86.5 to 89.0% by mole and an estimated average polymerization degree of 400, and NL-05 (manufactured by Mitsubishi Chemical Corporation) having a saponification degree of 98.5 by mole or more and an estimated average polymerization degree of 500 were used.

As the modified PVA, a poly(oxyethylene)-modified PVA was used. As this poly(oxyethylene)-modified PVA, LW-100 (manufactured by Mitsubishi Chemical Corporation) having a saponification degree of 39.0 to 46.0% by mole with an undisclosed average polymerization degree was used. This LW-100 is commercially available usually in the form of an aqueous solution, and was used after being substituted with a methanol solvent. As for a substitution method, using a rotary evaporator (manufactured by Nihon BUCHI K.K.), water was removed by vacuum distillation in a 90°C hot water bath, and the resultant was subsequently cooled, after which the remaining solid component was dissolved in and diluted with methanol (manufactured by FUJIFILM Wako Pure Chemical Corporation) such that a target solid concentration was obtained.

Hydroxypropylcellulose (hereinafter, referred to as "HPC"): NISSO HPC SSL manufactured by Nippon Soda Co., Ltd. in the form of regular powder (average particle size: 150 to 190 μm) was used. The molecular weight thereof determined by GPC is 40,000.

PENON PKW: as a modified starch, a hydroxypropyl enzyme-treated dextrin manufactured by Nippon Starch Chemical Co., Ltd. was used.

(Third Component)

Methyltrimethoxysilane (manufactured by Tokyo Chemical Industry Co., Ltd.): having a structure represented by Formula (1) wherein $R_1$ and $R_2$ are methyl groups.

[Example 1]

<Preparation of Hydrolysate Solution of Alkoxysilane Condensate>

After adding 15.4 g of MKC silicate MS-51 (manufactured by Mitsubishi Chemical Corporation), 14 g of methanol, 5.27 g of pure water, and 0.16 g of maleic acid, and stirring these materials for 5 hours, 46 g of methanol was further added, and the resultant was left to stand overnight to obtain a hydrolysate of an alkoxysilane condensate having a solid concentration of 10% in terms of $SiO_2$.

<Preparation of PVA Solution>

Methanol in an amount of 76.0 g was added to 19.0 g of pure water, and 5 g of polyvinyl alcohol NK-05R (manufactured by Mitsubishi Chemical Corporation) was further added with stirring. The resultant was stirred for 15 minutes at room temperature, heated to 60°C, and then stirred for 1 hour to dissolve the PVA, whereby an aqueous PVA methanol solution having a solid concentration of 5% was obtained.

<Production of Composite Liquid>

To a container in which 6.0 g of the thus obtained PVA methanol solution was placed, 7.0 g of the above-obtained hydrolysate solution of the alkoxysilane condensate was added dropwise, followed by 1-hour stirring. By this, the ratio of the $SiO_2$ solid concentration and the PVA solid concentration ($SiO_2$/PVA) in the resulting composite liquid was adjusted to be 70 parts by weight/30 parts by weight.

[Example 2]

<Preparation of Hydrolysate Solution of Alkoxysilane Condensate>

After adding 13.0 g of MKC silicate MS-51 (manufactured by Mitsubishi Chemical Corporation), 3.6 g of methyltrimethoxysilane (hereinafter, referred to as "MeTMOS", manufactured by Tokyo Chemical Industry Co., Ltd.), 23 g of methanol, 6.15 g of pure water, and 0.16 g of maleic acid, and stirring these materials for 2 hours, 42 g of methanol was further added, and the resultant was left to stand overnight to obtain a hydrolysate of an alkoxysilane condensate containing a third component with a solid concentration of 10% in terms of $SiO_2$.

<Production of Composite Liquid>

To a container in which 6.0 g of the PVA methanol solution prepared in [Example 1] was placed, 7.0 g of the above-obtained hydrolysate of the alkoxysilane condensate containing the third component was added dropwise, followed by 1-hour stirring. By this, the ratio of the $SiO_2$ solid concentration and the PVA solid concentration in the resulting composite liquid was adjusted to be 70 parts by weight/30 parts by weight.

[Example 5]

<Preparation of Hydrolysate Solution of Alkoxysilane Condensate>

After adding 15.4 g of MKC silicate MS-51 (manufactured by Mitsubishi Chemical Corporation), 31.2 g of methanol, 3.25 g of pure water, and 0.16 g of maleic acid, and stirring these materials for 1 hour, the resultant was left to stand overnight to obtain a hydrolysate of an alkoxysilane condensate having a solid concentration of 20% in terms of $SiO_2$.

<Preparation of PVA Solution>

Methanol in an amount of 47.5 g was added to 47.5 g of pure water, and 5 g of polyvinyl alcohol GL-03 (manufactured by Mitsubishi Chemical Corporation) was further added with stirring. The resultant was stirred for 15 minutes at room temperature, heated to 60°C, and then stirred for 1 hour to dissolve the PVA, whereby an aqueous PVA methanol solution having a solid concentration of 5% was obtained.

<Production of Composite Liquid>

To a container in which 12.0 g of the thus obtained PVA methanol solution was placed, 7.0 g of the above-obtained hydrolysate solution of the alkoxysilane condensate was added dropwise, followed by 1-hour stirring. By this, the ratio of the $SiO_2$ solid concentration and the PVA solid concentration in the resulting composite liquid was adjusted to be 70 parts by weight/30 parts by weight.

[Example 6]

<Preparation of Hydrolysate Solution of Alkoxysilane Condensate>

After adding 13.0 g of MKC silicate MS-51 (manufactured by Mitsubishi Chemical Corporation), 3.6 g of MeTMOS, 28.5 g of methanol, 5.88 g of pure water, and 0.16 g of maleic acid, and stirring these materials for 1 hour, the resultant was left to stand overnight to obtain a hydrolysate of an alkoxysilane condensate having a solid concentration of 20% in terms of $SiO_2$.

<Preparation of PVA Solution>

Methanol in an amount of 47.5 g was added to 47.5 g of pure water, and 5 g of polyvinyl alcohol GL-03 (manufactured by Mitsubishi Chemical Corporation) was further added with stirring. The resultant was stirred for 15 minutes at room temperature, heated to 60°C, and then stirred for 1 hour to dissolve the PVA, whereby an aqueous PVA methanol solution having a solid concentration of 5% was obtained.

<Production of Composite Liquid>

To a container in which 12.0 g of the thus obtained PVA methanol solution was placed, 7.0 g of the above-obtained hydrolysate of the alkoxysilane condensate was added dropwise, followed by 1-hour stirring. By this, the ratio of the $SiO_2$ solid concentration and the PVA solid concentration in the resulting composite liquid was adjusted to be 70 parts by weight/30 parts by weight.

[Example 11]

<Preparation of Hydrolysate Solution of Alkoxysilane Condensate>

After adding 15.4 g of MKC silicate MS-51 (manufactured by Mitsubishi Chemical Corporation), 31.2 g of methanol, 3.25 g of pure water, and 0.16 g of maleic acid, and stirring these materials for 1 hour, the resultant was left to stand overnight to obtain a hydrolysate of an alkoxysilane condensate having a solid concentration of 20% in terms of $SiO_2$.

<Preparation of Hydroxypropylcellulose Solution>

To a container in which 10.0 g of NISSO HPC SSL (manufactured by Nippon Soda Co., Ltd.) was placed, 90 g of methanol was added, and the resultant was stirred at room temperature to dissolve the hydroxypropylcellulose (hereinafter, referred to as "HPC"), whereby an HPC methanol solution having a solid concentration of 10% was obtained.

<Production of Composite Liquid>

To a container in which 6.0 g of the thus obtained HPC methanol solution was placed, 7.0 g of the above-obtained hydrolysate of the alkoxysilane condensate was added dropwise, followed by 1-hour stirring. By this, the ratio of the $SiO_2$ solid concentration and the HPC solid concentration in the resulting composite liquid was adjusted to be 70 parts by weight/30 parts by weight.

[Example 13]

<Preparation of Hydrolysate Solution of Alkoxysilane Condensate>

After adding 15.4 g of MKC silicate MS-51 (manufactured by Mitsubishi Chemical Corporation), 31.2 g of methanol, 3.25 g of pure water, and 0.16 g of maleic acid, and stirring these materials for 1 hour, the resultant was left

to stand overnight to obtain a hydrolysate of an alkoxysilane condensate having a solid concentration of 20% in terms of $SiO_2$.

<Preparation of Modified Starch Solution>

To a container in which 5.0 g of PENON PKW (manufactured by Nippon Starch Chemical Co., Ltd.) was placed, 95.0 g of pure water was added, and the resultant was heated to 60°C and then stirred for 1 hour to dissolve the modified starch, whereby an aqueous modified starch solution having a solid concentration of 5% was obtained.

<Production of Composite Liquid>

To a container in which 12.0 g of the thus obtained aqueous modified starch solution was placed, 7.0 g of the above-obtained hydrolysate of the alkoxysilane condensate was added dropwise, followed by 1-hour stirring. By this, the ratio of the $SiO_2$ solid concentration and the HPC solid concentration in the resulting composite liquid was adjusted to be 70 parts by weight/30 parts by weight.

[Comparative Example 1]

<Preparation of Hydrolysate Solution of Alkoxysilane Condensate>

After adding 15.4 g of MKC silicate MS-51 (manufactured by Mitsubishi Chemical Corporation), 31.2 g of methanol, 3.25 g of pure water, and 0.16 g of maleic acid, and stirring these materials for 1 hour, the resultant was left to stand overnight to obtain a hydrolysate of an alkoxysilane condensate having a solid concentration of 20% in terms of $SiO_2$.

[Comparative Example 2]

<Preparation of PVA Solution>

Methanol in an amount of 63.0 g was added to 27.0 g of pure water, and 10 g of polyvinyl alcohol NK-05R (manufactured by Mitsubishi Chemical Corporation) was further added with stirring. The resultant was stirred for 15 minutes at room temperature, heated to 60°C, and then stirred for 1 hour to dissolve the PVA, whereby an aqueous PVA methanol solution having a solid concentration of 10% was obtained.

[Comparative Example 3]

<Preparation of Hydrolysate Solution of Trimethoxysilane Monomer>

After adding 15.4 g of MeTMOS, 23.1 g of methanol, 6.3 g of pure water, and 0.16 g of maleic acid, and stirring these materials for 1 hour, the resultant was left to stand overnight to obtain a hydrolysate of methyltrimethoxysilane having a solid concentration of 20% in terms of $SiO_2$.

<Production of Composite Liquid>

To a container in which 12.0 g of the PVA methanol solution prepared in [Example 1] was placed, 7.0 g of the above-obtained hydrolysis-condensation product of MeTMOS was added dropwise, followed by 1-hour stirring. By this, the ratio of the $SiO_2$ solid concentration and the PVA solid concentration in the resulting composite liquid was adjusted to be 70 parts by weight/30 parts by weight.

[Comparative Example 4]

<Preparation of PVA Solution>

To a container, 5 mL of 0.1-mol nitric acid (manufactured by FUJIFILM Wako Pure Chemical Corporation) and 20.2 g of pure water were added, and 3.4 g of a PVA (manufactured by FUJIFILM Wako Pure Chemical Corporation, average polymerization degree = 500, saponification degree = 86 to 90% by mole) was further added with stirring. The resultant was stirred for about 15 minutes at room temperature and then heated for 1 hour at 60°C.

<Preparation of Alkoxysilane Solution>

An alkoxysilane mixed solution was prepared by adding 7.8 g of tetraethoxysilane (manufactured by Tama Chemicals Co., Ltd., hereinafter referred to as "TEOS"; a compound which is represented by Formula (2) wherein R is an ethyl group, and does not have a repeating structure, i.e. n = 1), 2.3 g of methyltriethoxysilane (manufactured by Kishida Chemical Co., Ltd., hereinafter referred to as "MeTEOS"), and 3.2 g of methanol, and stirring the resultant for 1 hour at room temperature.

<Preparation of Alkoxysilane/PVA Mixed Solution>

To a container in which the whole amount of the above-prepared PVA solution was placed, the whole amount of the above-prepared alkoxysilane mixed solution was added dropwise while stirring the PVA solution. After the completion of this dropwise addition, the resultant was stirred for 3 hours, and then further stirred overnight at room temperature. By this, an alkoxysilane/PVA mixed solution having a ratio between the solid concentration in terms of $SiO_2$ and the PVA solid concentration of 50 parts by weight/50 parts by weight was prepared.
Solutions of other Examples and Comparative Examples were prepared in accordance with the respective formulations shown in Table 1.
[Example 3], [Example 4], and [Example 7] were carried out in accordance with the respective formulations shown in Table 1 and the preparation procedures of [Example 1].
[Example 8] to [Example 10] and [Example 14] were carried out in accordance with the respective formulations shown in Table 1 and the preparation procedures of [Example 5].
[Example 12] was carried out in accordance with the formulation shown in Table 1 and the preparation procedures of [Example 11].

[Table 1-1]

| | Raw material species | | | Silicate hydrolysate solution (A) | | | | | |
|---|---|---|---|---|---|---|---|---|---|
| | | | | Alkoxysilane condensate | Methanol | Water | Acid species | Amount of acid | Third component |
| | Alkoxysilane condensate | OH group-containing resin | Third component | (g) | (g) | (g) | | (g) | (g) |
| Example 1 | MS-51 | NK-05R | - | 15.4 | 60 | 5.27 | Maleic acid | 0.16 | - |
| Example 2 | MS-51 | NK-05R | MeTMOS | 13.0 | 60 | 6.15 | Maleic acid | 0.16 | 3.6 |
| Example 3 | MS-51 | NL-05 | - | 15.4 | 60 | 5.27 | Maleic acid | 0.16 | - |
| Example 4 | MS-51 | LW-100 | - | 15.4 | 60 | 5.27 | Maleic acid | 0.16 | - |
| Example 5 | MS-51 | GL-03 | - | 15.4 | 31.2 | 3.25 | Maleic acid | 0.16 | - |
| Example 6 | MS-51 | GL-03 | MeTMOS | 13 | 28.5 | 5.88 | Maleic acid | 0.16 | 3.6 |
| Example 7 | MS-51 | GL-03 | MeTMOS | 13.5 | 60 | 5.57 | Maleic acid | 0.16 | 1.7 |
| Example 8 | MS-51 | NK-05R | - | 15.4 | 31.2 | 3.25 | Maleic acid | 0.16 | - |
| Example 9 | MS-51 | NL-05 | - | 15.4 | 31.2 | 3.25 | Maleic acid | 0.16 | - |
| Example 10 | MS-51 | NK-05R | - | 15.4 | 31.2 | 3.25 | Maleic acid | 0.16 | - |
| Example 11 | MS-51 | NISSO HPC SSL | - | 15.4 | 31.2 | 3.25 | Maleic acid | 0.16 | - |
| Example 12 | MS-51 | NISSO HPC SSL | - | 15.4 | 31.2 | 3.25 | Maleic acid | 0.16 | - |
| Example 13 | MS-51 | PENON PKW | - | 15.4 | 31.2 | 3.25 | Maleic acid | 0.16 | - |

(continued)

| | Raw material species | | | Silicate hydrolysate solution (A) | | | | | |
|---|---|---|---|---|---|---|---|---|---|
| | | | | Alkoxysilane condensate | Methanol | Water | Acid species | Amount of acid | Third component |
| | Alkoxysilane condensate | OH group-containing resin | Third component | (g) | (g) | (g) | | (g) | (g) |
| Example 14 | MS-51 | GL-03 | - | 15.4 | 31.2 | 3.25 | Maleic acid | 0.16 | - |
| Comparative Example 1 | MS-51 | - | - | 15.4 | 31.2 | 3.25 | Maleic acid | 0.16 | - |
| Comparative Example 2 | - | NK-05R | - | - | - | - | - | - | - |
| Comparative Example 3 | - | GL-03 | MeTMOS | - | 23.1 | 6.3 | Maleic acid | 0.16 | 15.4 |

[Table 1-2]

| | OH group-containing resin solution (B) | | | Composite liquid | | |
|---|---|---|---|---|---|---|
| | OH group-containing resin | Water | Methanol | (A) | (B) | $SiO_2$ solid concentration/OH group-containing resin concentration (weight ratio) |
| | (g) | (g) | (g) | (g) | (g) | (g/g) |
| Example 1 | 5 | 19 | 76 | 7 | 6 | 70/30 |
| Example 2 | 5 | 19 | 76 | 7 | 6 | 70/30 |
| Example 3 | 5 | 95 | 0 | 6 | 16 | 60/40 |
| Example 4 | 10 | 0 | 90 | 7 | 6 | 70/30 |
| Example 5 | 5 | 47.5 | 47.5 | 7 | 12 | 70/30 |
| Example 6 | 5 | 47.5 | 47.5 | 7 | 12 | 70/30 |
| Example 7 | 5 | 47.5 | 47.5 | 7 | 6 | 70/30 |
| Example 8 | 10 | 27 | 63 | 6 | 8 | 60/40 |
| Example 9 | 5 | 95 | 0 | 32 | 2 | 20/80 |
| Example 10 | 10 | 27 | 63 | 9 | 2 | 90/10 |
| Example 11 | 10 | 0 | 90 | 7 | 6 | 70/30 |
| Example 12 | 10 | 0 | 90 | 2 | 16 | 20/80 |
| Example 13 | 5 | 95 | 0 | 7 | 12 | 70/30 |
| Example 14 | 5 | 47.5 | 47.5 | 6 | 16 | 60/40 |
| Comparative Example 1 | - | - | - | - | - | 100/0 |
| Comparative Example 2 | 10 | 27 | 63 | - | - | 0/100 |
| Comparative Example 3 | 5 | 47.5 | 47.5 | 7 | 12 | 70/30 |

Using the liquids prepared in [Example 1] to [Example 14] and [Comparative Example 1] to [Comparative Example 4], coating films for moisture permeability test were produced in accordance with the below-described method, and the thickness of each coating film was checked, after which a moisture permeability test was conducted.

<Film Formation for Moisture Permeability Test>

As a coating method, a spin coating method or a bar coating method was employed depending on the substrate to be used. A spin coating method was employed when a PET substrate (LUMIRROR T60, manufactured by Toray Industries, Inc.; thickness = 25 μm) was used, while a bar coating method was employed when a PBS substrate (manufactured by Mitsubishi Chemical Corporation, thickness = 30 μm) was used.

<Spin Coating>

A substrate cut into a 10-cm square was immobilized on the platform of a spin coater (MS-150, manufactured by Mikasa Co., Ltd.), and 5 mL of a solution was added to the middle of the substrate. The lid was closed, and the substrate was rotated at a speed of 750 rpm for 45 seconds. Thereafter, the substrate was removed from the platform and placed on a piece of heat-resistant paper, and the corners of the substrate was immobilized with a heat-resistant tape, after which the resultant was heated for 1 hour in a forced-convection constant-temperature incubator (DKN-400, manufactured by Yamato Scientific Co., Ltd.) set at 80°C, and then further heated for a prescribed time in a forced-convection constant-temperature drying oven (WFO-510, manufactured by Tokyo Rikakikai Co., Ltd.) set at 105°C.

In [Comparative Example 4], after the heating at 80°C, heating was performed for another 10 minutes using a microwave oven (manufactured by Yamazen Corporation, YRB-177, 60 Hz) at 500 W.

<Bar Coating>

A substrate cut into a size of 15 cm in length and 10.5 cm in width was immobilized on a piece of heat-resistant paper with a cellophane tape. This was placed on a horizontal table, and a composite liquid was put on the uppermost part of the substrate. A wire bar (No. 18, manufactured by Mitsui Electric Co., Ltd.) was place on the composite liquid and entirely soaked with the composite liquid, after which the substrate was coated with the composite liquid by pulling the bar to the lowermost part of the substrate. This substrate on the heat-resistant paper as a whole was heated for 1 hour in a forced-convection constant-temperature incubator set at 80°C, and then further heated for a prescribed time in a forced-convection constant-temperature drying oven set at 105°C.

<Measurement of Film Thickness>

The thickness of a coating film on the thus obtained coated substrate was checked. For the substrate coated by the above-described bar coating method, the cellophane tape immobilizing the substrate was peeled off, and the level difference between the uncoated portion and the coated portion was measured using a laser microscope (manufactured by KEYENCE Corporation) to check the film thickness. For the substrate coated by the above-described spin coating method, the film thickness was measured using a film thickness measurement system (F20, manufactured by Filmetrics Japan, Inc.).

The conditions of the coated substrate production and the thickness of the resulting coating film are shown in Table 2.

[Table 2]

| | Coating method | Heating temperature | Heating time | Film thickness |
|---|---|---|---|---|
| | | ° C | hour | μm |
| Example 1 | Spin coating | 105 | 72 | 0.5 |
| Example 2 | Bar coating | 105 | 72 | 1 |
| Example 3 | Spin coating | 105 | 72 | 0.5 |
| Example 4 | Spin coating | 105 | 72 | 0.4 |
| Example 5 | Bar coating | 105 | 48 | 3 |
| Example 6 | Bar coating | 105 | 48 | 3 |
| Example 7 | Bar coating | 105 | 72 | 1.5 |
| Example 8 | Bar coating | 90 | 96 | 8 |
| Example 9 | Spin coating | 105 | 48 | 0.3 |
| Example 10 | Spin coating | 105 | 48 | 1.1 |
| Example 11 | Spin coating | 105 | 48 | 1.3 |
| Example 12 | Spin coating | 105 | 48 | 1.3 |
| Example 13 | Spin coating | 105 | 48 | 0.8 |
| Example 14 | Bar coating | 90 | 96 | 5 |
| Comparative Example 1 | Spin coating | 105 | 0.5 | 0.5 |
| Comparative Example 2 | Spin coating | 105 | 0.5 | 0.5 |
| Comparative Example 3 | Bar coating | 105 | 72 | 1.7 |

<Moisture Permeability Test>

Using the thus obtained coated substrate, a water vapor permeability cup (manufactured by Yasuda Seiki Seisakusho, Ltd.) was prepared in accordance with JIS Z0208, and this cup was placed in an environmental tester (SH-641, manufactured by ESPEC Corp.) set at 25°C and 90%RH to conduct a test. The details of the test conform to JIS Z0208.

After determining the moisture permeability in accordance with JIS Z0208, the moisture permeability of each film itself was calculated using the following equation:

$$\frac{L}{P} = \frac{L_1}{P_1} + \frac{L_2}{P_2} \quad \cdots (1)$$

In this equation, L represents a total thickness of a film and a substrate; $L_1$ represents the thickness of a composite film; $L_2$ represents the thickness of the substrate; P represents the overall moisture permeability coefficient (a value obtained by the moisture permeability test); $P_1$ represents the moisture permeability coefficient of the composite film; and $P_2$ represents the moisture permeability coefficient of the substrate.

The results of the moisture permeability test are shown in Table 3. The symbols of the moisture permeability in each Table mean the following evaluation results.

A: The moisture permeability was less than 200 g/m$^2$·day.
B: The moisture permeability was 200 g/m$^2$·day or more and less than 500 g/m$^2$·day.
C: The moisture permeability was 500 g/m$^2$·day or more and less than 1,000 g/m$^2$·day.
D: The moisture permeability was 1,000 g/m$^2$·day or more.

[Table 3]

| | OH group-containing resin | Hydrolysis-condensation product | Third component | $SiO_2$ concentration (%) | Moisture permeability |
|---|---|---|---|---|---|
| Example 1 | NK-05R | MS-51 | - | 70 | A |
| Example 2 | NK-05R | MS-51 | MeTMOS | 70 | B |
| Example 3 | NL-05 | MS-51 | - | 60 | A |
| Example 4 | LW-100 | MS-51 | - | 70 | A |
| Example 5 | GL-03 | MS-51 | - | 70 | A |
| Example 6 | GL-03 | MS-51 | MeTMOS | 70 | A |
| Example 7 | GL-03 | MS-51 | MeTMOS | 70 | A |
| Example 8 | NK-05R | MS-51 | - | 60 | C |
| Example 9 | NL-05 | MS-51 | - | 20 | A |
| Example 10 | NK-05R | MS-51 | - | 90 | A |
| Example 11 | NISSO HPC SSL | MS-51 | - | 70 | A |
| Example 12 | NISSO HPC SSL | MS-51 | - | 20 | A |
| Example 13 | PENON PKW | MS-51 | - | 70 | A |
| Example 14 | GL-03 | MS-51 | - | 60 | A |
| Comparative Example 1 | - | MS-51 | - | 100 | D |
| Comparative Example 2 | NK-05R | - | - | 0 | D |
| Comparative Example 3 | GL-03 | - | MeTMOS | 70 | D |
| Comparative Example 4 | PVOH | TEOS | MeTEOS | 50 | D |

According to Examples, fertilizer coating materials formed of an OH group-containing resin and a hydrolysate of an alkoxysilane condensate exhibited a low moisture permeability. From [Comparative Example 1] and [Comparative Example 2], it is seen that a hydrolysate of an alkoxysilane condensate alone or an OH group-containing resin alone had a high moisture permeability and, from [Comparative Example 3] and [Comparative Example 4], it is seen that a fertilizer coating material having a low moisture permeability was not obtained with the use of a hydrolysate of an alkoxysilane.

[Example 15]

<Preparation of Silicate Hydrolysate Solution>

After adding 15.4 g of MKC silicate MS-51 (manufactured by Mitsubishi Chemical Corporation), 31.2 g of methanol, 3.25 g of pure water, and 0.16 g of maleic acid, and stirring these materials for 1 hour, the resultant was left to stand overnight to obtain a silicate hydrolysate solution having a solid concentration of 20% in terms of $SiO_2$.

<Preparation of Aqueous PVA Solution>

Methanol in an amount of 47.5 g was added to 47.5 g of pure water, and 5.0 g of polyvinyl alcohol GL-03 (manufactured by Mitsubishi Chemical Corporation, average polymerization degree = 400, saponification degree = 86.5 to 89.0% by mole) was further added with stirring. The resultant was stirred for 15 minutes at room temperature, heated to 60°C, and then stirred for 1 hour to dissolve the PVA, whereby an aqueous PVA methanol solution having a solid concentration of 5% was obtained.

<Production of Composite Liquid>

The thus obtained aqueous PVA methanol solution in an amount of 24.0 g was mixed with 14.0 g of the above-obtained silicate hydrolysate solution. The ratio of the $SiO_2$ solid concentration and the PVA solid concentration was adjusted to be 70% by weight/30% by weight.

<Coating>

Urea in an amount of 20.0 g was placed in a small fluidized bed coater (FIG. 1). A blowing gas (air) was circulated at a rate of 170 NL/min, and the temperature inside the coater was set at 80°C. After confirming that the temperature reached the target value, an spray gas (nitrogen) was circulated at a rate of 7.0 NL/min, and the above-obtained composite liquid was fed at a rate of 0.28 g/min to perform coating. After 48 minutes, the feed of the composite liquid was stopped. Thereafter, the resultant was dried inside the coater for 15 minutes at a constant temperature. The temperature inside the coater was subsequently lowered to 40°C or below, after which the blowing gas and the spray gas were stopped, and the thus coated urea was taken out.

<Heating (Drying) of Coating Film>

The coated urea was heated in a constant-temperature forced-convection drying oven (manufactured by Advantec Co., Ltd.) at 90°C for 96 hours to obtain a coated granular fertilizer.

[Example 16]

A composite liquid was obtained in the same manner as in Example 15, except that 32 g of the aqueous PVA methanol solution was mixed with 12 g of the silicate hydrolysate solution. In the thus obtained composite liquid, the ratio of the $SiO_2$ solid concentration and the PVA solid concentration was 60% by weight/40% by weight.

A coated granular fertilizer was obtained by coating urea with the composite liquid and heating the thus coated urea in the same manner as in Example 15, except that 15.4 g of the composite liquid was fed at a rate of 0.28 g/min over a period of 55 minutes.

[Example 17]

Methanol in an amount of 63 g was added to 27 g of pure water, and 10 g of polyvinyl alcohol NK05R (manufactured by Mitsubishi Chemical Corporation) was further added with stirring. The resultant was stirred for 15 minutes at room temperature, heated to 60°C, and then stirred for 1 hour to dissolve the PVA, whereby an aqueous PVA methanol

solution having a solid concentration of 10% was obtained.

Subsequently, 16.0 g of the thus obtained aqueous PVA methanol solution was mixed with 12.0 g of a silicate hydrolysate solution to obtain a composite liquid. The ratio of the $SiO_2$ solid concentration and the PVA solid concentration was adjusted to be 60% by weight/40% by weight.

A coated granular fertilizer was obtained by coating urea with the thus obtained composite liquid and heating the thus coated urea in the same manner as in Example 15, except that 9.8 g of the composite liquid was fed at a rate of 0.28 g/min over a period of 35 minutes.

[Comparative Example 5]

<Preparation of PVA Aqueous Solution>

Methanol in an amount of 27.0 g was added to 63.0 g of pure water, and 10.0 g of polyvinyl alcohol NK-05R (manufactured by Mitsubishi Chemical Corporation, average polymerization degree = 500, saponification degree = 71.0 to 75.0% by mole) was further added with stirring. The resultant was stirred for 15 minutes at room temperature, heated to 60°C, and then stirred for 1 hour to dissolve the PVA, whereby an aqueous PVA methanol solution having a solid concentration of 10% was obtained. Subsequently, 40.0 g of this aqueous PVA methanol solution was mixed with 30.0 g of distilled water and thereby diluted to a 5.7% aqueous PVA methanol solution.

<Coating>

Urea in an amount of 20.0 g was placed in a small fluidized bed coater (FIG. 1). A drying gas (air) was circulated at a rate of 170 NL/min, and the temperature inside the coater was set at 80°C. After confirming that the temperature reached the target value, an spray gas (nitrogen) was circulated at a rate of 7.0 NL/min, and the above-obtained aqueous PVA methanol solution was fed at a rate of 0.28 g/min to perform coating. After 89 minutes, the feed of this composite liquid was stopped. Thereafter, the resultant was dried inside the coater for 15 minutes at a constant temperature. The temperature inside the coater was subsequently lowered to 40°C or below, after which the drying gas and the spray gas were stopped, and the urea was taken out.

<Heating-Drying of Coating Film>

The thus obtained coated urea was heated in a constant-temperature forced-convection drying oven (manufactured by Advantec Co., Ltd.) at 90°C for 96 hours to obtain a coated granular fertilizer.

[Comparative Example 6]

<Preparation of Aqueous PVA/Silica Solution>

Methanol in an amount of 27.0 g was added to 63.0 g of pure water, and 10.0 g of polyvinyl alcohol NK-05R (average polymerization degree = 500, saponification degree = 71.0 to 75.0% by mole) was further added with stirring. The resultant was stirred for 15 minutes at room temperature, heated to 60°C, and then stirred for 1 hour to dissolve the PVA, whereby an aqueous PVA methanol solution having a solid concentration of 10% was obtained. Subsequently, 21.0 g of this aqueous PVA methanol solution was mixed with 4.9 g of silicon dioxide (manufactured by Kanto Chemical Co., Inc.; precipitated, amorphous, powder) and 25.0 g of distilled water, and the ratio of the $SiO_2$ solid concentration and the PVA solid concentration was adjusted to be 70% by mass/30% by mass.

<3D Coating>

Urea in an amount of 20.0 g was placed in a small fluidized bed coater (FIG. 1). A drying gas (air) was circulated at a rate of 170 NL/min, and the temperature inside the coater was set at 80°C. After confirming that the temperature reached the target value, a spray gas (nitrogen) was circulated at a rate of 7.0 NL/min, and the above-obtained aqueous PVA methanol solution was fed at a rate of 0.28 g/min to perform coating. After 37 minutes, the feed of this composite liquid was stopped. Thereafter, the resultant was dried inside the coater for 15 minutes at a constant temperature. The temperature inside the coater was subsequently lowered to 40°C or below, after which the drying gas and the spray gas were stopped, and the urea was taken out.

<Elution Test>

In a 250-mL container, 1 g of coated urea and 200 mL of pure water were added. This container was left to stand in an incubator at a constant temperature (30°C) and, after 24 hours, the urea nitrogen concentration in water was measured. The measurement of urea concentration was performed as follows. First, 50 mL of hydrochloric acid, 250 mL of ethanol, and 700 mL of pure water were mixed, and 2.5 g of *p*-dimethylaminobenzaldehyde was dissolved in the resulting mixture to prepare a reaction solution. Subsequently, 6 mL of this reaction solution was mixed with 0.5 mL of a urea eluate, and the resultant was left to stand for 30 minutes, after which the absorbance at 420 nm was measured using a spectrophotometer. A calibration curve was prepared using aqueous urea solutions each having a known concentration, and the urea concentration was determined from the absorbance.

<Measurement of Initial Number of Floating Particles>

Twenty particles of coated urea were placed in a petri dish, and pure water was poured thereto along the wall of the petri dish at a rate of 10 mL/min. After 50 mL of pure water was poured, the number of particles floating on the water surface was measured.

The above-obtained coated granular fertilizers were each analyzed in accordance with the above-described elution test and measurement of the number of floating particles. The results thereof are shown in Table 4.

[Table 4]

| | Coverage | Urea elution rate | Initial number of floating particles |
|---|---|---|---|
| Example 15 | 6.5% | 43.4% | 0 |
| Example 16 | 6.5% | 55.1% | 0 |
| Example 17 | 6.5% | 59.1% | 0 |
| Comparative Example 5 | not measurable | 100% | not measurable |
| Comparative Example 6 | not measurable | 100% | not measurable |

<Elution Test>

In [Example 15] to [Example 17] of the coated granular fertilizer of the present invention, elution was reduced as compared to [Comparative Example 5] and [Comparative Example 6]. In [Comparative Example 5] and [Comparative Example 6], after the start of the elution test, the coating film was dissolved and eliminated, and urea was also dissolved along with the coating film and completely dissolved within 5 minutes after the start of the test, resulting in the disappearance of the fertilizer shape.

<Initial Number of Floating Particles>

In the measurement of the initial number of floating particles, no initially floating granular fertilizer was observed in [Example 15] to [Example 17]. In [Comparative Example 5] and [Comparative Example 6], floating particles were not measurable due to the dissolution of the respective fertilizers during the measurement.

<Measurement of Coverage>

As for the measurement of coverage, the coverage was found to be 6.5% in [Example 15] to [Example 17]. In [Comparative Example 5] and [Comparative Example 6], the coverage was not measurable due to the dissolution of the respective coating films in water.

In the above-described manner, it is apparent that, in the coated granular fertilizer of the present invention, the coating film maintains its shape even in water, and elution of the fertilizer component of the coated fertilizer is inhibited. Further, not only the coating film does not cause a problem of initial floating and the coating shell after use is unlikely to flow out of a field, but also the coating shell residue is formed of a biodegradable resin and a silica component having no environmental load; therefore, the coated granular fertilizer of the present invention can be used as a coated granular fertilizer that does not impose an environmental load such as residual microplastics caused by its residual coating film.

<Confirmation of Si-O-C Bond by FT-IR>

The above-obtained coated urea of [Example 16] and that of [Comparative Example 5] were measured by FT-IR. The measurement was performed as follows using an FT-IR system 1N10MX (manufactured by Thermo Fisher Scientific K.K.), and the thus obtained spectra were each analyzed and peak-separated under the following conditions using an analysis software OMINIC (Version. 8.3.103, manufactured by Thermo Fisher Scientific K.K.).

Measurement method: ATR method
Shape of measurement sample: coated urea
Prism: diamond prism
Number of integrations: 64
Resolution: 4 $cm^{-1}$
Background correction: before sample measurement
Phase correction: Mertz method
Spectral intensity: absorbance
Baseline correction: automatic baseline correction
Smoothing: automatic smoothing
Peak detection: distribution function = Voigt function
Peak detection: peak detection sensitivity = low
Peak detection: full width at half maximum = 3.857 to 10
Peak fitting: noise = 5
Peak fitting: baseline correction = first-order (linear) interpolation
Peak fitting: repeated calculation = until the standard deviation value was 1.0 or less

<Solution $^1$H-NMR Measurement>

The coated urea obtained in [Example 16] was measured by solution $^1$H-NMR. The coated urea produced in [Example 16] was put into water and left to stand for 3 days at room temperature. It is noted here that a sample could not be obtained in [Comparative Example 5] due to the elution of the film in water, and $^1$H-NMR was thus not measurable. A urea-eluted sample was recovered, suction-filtered, and then washed with distilled water. This sample was dried at 100°C for 5 minutes and subsequently washed again with distilled water, and the wash liquid was suction-filtered and washed with distilled water. After drying the resultant at 100°C for 5 minutes, 0.050 g of the resulting coating film was put into a 9-mL screw tube, and one droplet of DMF was added thereto as a reference substance, after which the resultant was diluted with DMSO-d6 solvent to a total amount of 1.0 g. The screw tube was thoroughly shaken to allow unreacted PVA to elute out of the film, and this sample was put into an NMR tube up to a liquid surface height of 4 cm from the bottom of the tube. The thus prepared sample was measured using an NMR analyzer ECZ-400 (manufactured by JEOL Ltd.). The measurement conditions were as follows.

Magnetic field intensity: 9.425 T
Proton resonance frequency: 400 MHz
Number of integrations: 8
RD: 20 seconds

The thus obtained spectrum was subjected to a baseline height correction and a phase correction using a software DELTA (Version 5.3.1 or later, manufactured by JEOL Ltd.), and the normalized integral value of the peak attributed to the OH groups of the PVA was subsequently calculated, taking the integral value of a signal ($\delta$ = 7.95 ppm) of DMF (reference substance) as 100.

For the composite liquids used in some of Examples and Comparative Examples, the elution rates of their films into water were checked.

<Production of Self-Standing Film>

To a PTFE petri dish of 5 cm in diameter (manufactured by AS ONE Corporation), each composite liquid was added in an amount of 5 to 10 g depending on the viscosity of the composite liquid, and the added composite liquid was spread over the entire petri dish. With regard to [Example 18], [Example 19], and [Comparative Example 7], in accordance with Table 5, each composite liquid was heat-treated at a prescribed temperature for a certain period in a forced-convection constant-temperature incubator. The resulting film was taken out and put into a container, and water was added thereto until the film was immersed, and this container was left to stand at room temperature for at least 3 days.

The thus produced samples are shown in Table 6.

[Table 5]

| | Composite liquid | Treatment temperature |
|---|---|---|
| Example 18 | Example 5 | 90° C |
| Example 19 | Example 5 | 105° C |
| Comparative Example 7 | Comparative Example 2 | 105° C |

Using a 10-mL plastic disposable syringe (manufactured by AS ONE Corporation), 10 mL of the resulting solution was withdrawn and put into a 15-mL magnetic crucible (manufactured by AS ONE Corporation) through a syringe filter having 5-μm pores (manufactured by AS ONE Corporation). The solvent was evaporated over a period of 4 hours in a forced-convection constant-temperature incubator set at 120°C. After cooling the magnetic crucible to room temperature, the weight of the magnetic crucible was measured.

The thus obtained results of FT-IR measurement and solution $^1$H-NMR of [Example 16] and [Comparative Example 5] are shown in Table 6.

[Table 6]

| | FT-IR | Solution $^1$H-NMR |
|---|---|---|
| | 1430 $cm^{-1}$/1050 $cm^{-1}$ | %OH |
| Example 16 | 0.08 | 0.5 |
| Comparative Example 5 | 0.97 | not measurable |

As shown above, it is seen that Si-O-C bonds were formed in [Example 16], but not in [Comparative Example 5]

The film elution rates determined in [Example 18], [Example 19], and [Comparative Example 7] are shown in Table 7. The film elution rate is determined as the amount of elution with respect to the weight of the film used for the test by calculating the weight of eluted PVA in a total amount of the used solution from the concentration of the eluted PVA obtained by evaporation

[Table 7]

| | Film elution rate (%) |
|---|---|
| Example 18 | 0 |
| Example 19 | 4.8 |
| Comparative Example 7 | 100 |

According to the results of [Example 18] and [Example 19], the film elution rate was reduced to 0 by incorporating the heating step performed for a prescribed time; however, from the result of [Comparative Example 7], it is seen that the PVA film containing no Si-O-C bond was eluted. Accordingly, it is believed that Si-O-C bonds were generated by the reaction between OH groups in the hydrolysate of the alkoxysilane condensate and the OH group-containing resin.

[Comparative Example 8]

<Production of Precoated Urea>

Granular urea in an amount of 400.0 g was placed in a fluidized bed illustrated in FIG. 1. A blowing gas (air) was circulated at a rate of 1,000 NL/min, and the temperature inside the fluidized bed was set at 60°C. After confirming that the temperature reached the target value, a trichloroethylene solution dissolving BioPBS™ FZ71 (manufactured by Mitsubishi Chemical Corporation) at a concentration of 3% by weight was fed at a rate of 50 g/min to perform precoating. After 16 minutes, the feed of this composite liquid was stopped. Thereafter, the resultant was dried inside the fluidized bed for 15 minutes at a constant temperature. The temperature inside the fluidized bed was subsequently lowered to 40°C or below, after which the blowing gas and spray gas were stopped, and the urea was recovered. The thus recovered urea was heated in a constant-temperature forced-convection drying oven (manufactured by Advantec Co., Ltd.) at

105°C for 48 hours to obtain a precoated urea.

[Example 20]

<Preparation of Silicate Hydrolysate Solution>

After adding 13.0 g of MKC silicate MS-51 (manufactured by Mitsubishi Chemical Corporation), 28.5 g of methanol, 3.6 g of MeTMOS, 5.88 g of pure water, and 0.16 g of maleic acid, and stirring these materials for 1 hour, the resultant was left to stand overnight to obtain a silicate hydrolysate solution having a solid concentration of 20% in terms of $SiO_2$.

<Preparation of Aqueous PVA Solution>

To 95.0 g of pure water, 5.0 g of polyvinyl alcohol NL-05 (average polymerization degree = 500, saponification degree = 98.5% by mole or higher) was added with stirring. The resultant was stirred for 15 minutes at room temperature, heated to 90°C, and then stirred for 1 hour to dissolve the PVA, whereby an aqueous PVA solution having a solid concentration of 5% was obtained.

<Production of Composite Liquid>

The thus obtained aqueous PVA solution in an amount of 11.2 g was mixed with 4.2 g of the above-obtained silicate hydrolysate solution. The ratio of the $SiO_2$ solid concentration and the PVA solid concentration was adjusted to be 60% by weight/40% by weight.

<Coating>

In a small fluidized bed coater (FIG. 2), 20.0 g of the precoated urea obtained in Comparative Example 3 was placed. A blowing gas (air) was circulated at a rate of 170 NL/min, and the temperature inside the coater was set at 90°C. After confirming that the temperature reached the target value, a spray gas (nitrogen) was circulated at a rate of 7.0 NL/min, and the above-obtained composite liquid was fed at a rate of 0.23 g/min to perform coating. After 68 minutes, the feed of this composite liquid was stopped. Thereafter, the resultant was dried inside the coater for 15 minutes at a constant temperature. The temperature inside the coater was subsequently lowered to 40°C or below, after which the blowing gas and the spray gas were stopped, and the resulting coated granular urea was taken out.

<Heat Treatment>

The thus obtained coated urea was heated in a constant-temperature forced-convection drying oven (manufactured by Advantec Co., Ltd.) at 105°C for 48 hours to obtain a coated granular fertilizer.

<Initial Floating Rate>

The urea elution rate and the initial floating rate of the coated granular fertilizers according to Example B and Comparative Example B were measured by the same methods as described above.

<Film Amount>

The amount (coverage) of a precoated film and that of a fertilizer coating material film were calculated by the following equations:

$$\text{Precoated film [\% by weight]} = (\text{Weight of precoating material/Weight of precoated core material}) \times 100$$

$$\text{Fertilizer coating material film [\% by weight]} = (\text{Weight of coating material/Weight of coated granular fertilizer}) \times 100$$

[Table 8]

| | Precoated film | Fertilizer coating material | Urea elution rate | Initial floating rate |
|---|---|---|---|---|
| | Composition/% by weight | % by weight | % | % |
| Example 20 | PBS/8.4 | 6.5 | 10 | 0 |
| Comparative Example 8 | PBS/8.4 | - | 100 | 86 |

It is seen that, when PBS-precoated urea is overcoated with a film of the fertilizer coating material according to one embodiment of the present invention, the release of the urea, which is a fertilizer component, is effectively inhibited. In FIG. 3 which is a scanning electron micrograph (SEM image) of the PBS-coated urea of Comparative Example 8, defects are observed on the film surface. In the SEM image of Example 20 shown in FIG. 4, it is seen that defects are filled with a film of the fertilizer coating material. In Comparative Example 8, it was found that, although elution could not be inhibited at all, the elution period was further delayed by overcoating the precoated urea with a film formed of the fertilizer coating material as compared to the case of using such a fertilizer coating material film by itself, and elution control was effectively exerted. In this manner, by combining a precoated film with an overcoat of a film of the fertilizer coating material according to one embodiment of the present invention, not only elution inhibition is more effectively attained, but also a favorable floating inhibition effect is obtained.

DESCRIPTION OF SYMBOLS

10: small fluidized bed coater
1: spray gun
2: nozzle
3: urea particle
4: blowing gas
5: exhaust
20: coater
21: fluidized bed
22: two-fluid spray nozzle
23: particle
24: blower
25: heater
26: hot air
27: exhaust
28: dissolution tank
29: spray solution

## Claims

1. A fertilizer coating material, comprising a dehydration-condensation product of an OH group-containing resin and an alkoxysilane condensate.

2. The fertilizer coating material according to claim 1, wherein the OH group-containing resin is a biodegradable resin.

3. The fertilizer coating material according to claim 1 or 2, wherein the OH group-containing resin is a resin comprising an alcoholic hydroxyl group or a carboxyl group.

4. The fertilizer coating material according to any one of claims 1 to 3, comprising a Si-O-C bond.

5. The fertilizer coating material according to any one of claims 1 to 4, wherein the Si content is 20% by weight or more and less than 95% by weight in terms of $SiO_2$.

**6.** The fertilizer coating material according to any one of claims 1 to 5, wherein the OH group-containing resin is selected from the group consisting of polyvinyl alcohol resins, starch, cellulose, lignin, chitin, chitosan, PBS (polybutylene succinate), PBSA (polybutylene succinate adipate), PBAT (polybutylene adipate terephthalate), PCL (polycaprolactone), starch polyester, cellulose acetate, PHB (polyhydroxybutyrate), PHBH (poly(3-hydroxybutyrate-co-3-hydroxyhexanoate)), PHBV (poly(3-hydroxybutyrate-co-3-hydroxyvalerate)), PLA (polylactic acid), polyglycolic acid (PGA), polydioxanone (PDO), and copolymers thereof.

**7.** The fertilizer coating material according to any one of claims 1 to 6, wherein the OH group-containing resin is a polyvinyl alcohol resin.

**8.** The fertilizer coating material according to any one of claims 1 to 7, comprising a three-dimensional siloxane crosslinked structure derived from the alkoxysilane condensate.

**9.** The fertilizer coating material according to any one of claims 1 to 8, wherein the alkoxysilane condensate comprises two or more kinds of alkoxysilanes.

**10.** The fertilizer coating material according to any one of claims 1 to 9, comprising at least a compound represented by Formula (1) as the alkoxysilane condensate:

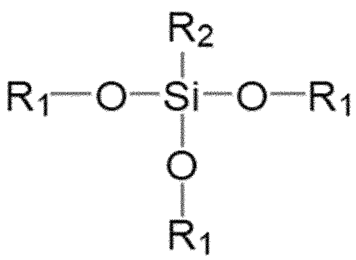

(1)

wherein, plural Ris each independently represent an alkyl group having 1 to 10 carbon chains or an aromatic group having 6 to 15 carbon atoms, and $R_2$ represents a hydrogen atom, a halogen atom, or a monovalent organic group.

**11.** The fertilizer coating material according to claim 10, wherein the compound represented by Formula (1) is methyltrimethoxysilane.

**12.** A coated granular fertilizer, coated with a film formed of the coating material according to any one of claims 1 to 11, wherein the content of the film formed of the coating material is 1% by mass or more and 20% by mass or less in 100% by mass of the coated granular fertilizer.

**13.** The coated granular fertilizer according to claim 12, wherein a precoat layer is further arranged between the fertilizer and the film.

**14.** The coated granular fertilizer according to claim 12 or 13, wherein the precoat layer comprises a biodegradable resin selected from the group consisting of polyvinyl alcohol resins, starch, cellulose, lignin, chitin, chitosan, PBS (polybutylene succinate), PBSA (polybutylene succinate adipate), PBAT (polybutylene adipate terephthalate), PCL (polycaprolactone), starch polyester, cellulose acetate, PHB (polyhydroxybutyrate), PHBH (poly(3-hydroxybutyrate-co-3-hydroxyhexanoate)), PHBV (poly(3-hydroxybutyrate-co-3-hydroxyvalerate)), PLA (polylactic acid), PGA (polyglycolic acid), PDO (polydioxanone), and copolymers thereof.

**15.** A method of producing a coated granular fertilizer, the method comprising the steps of:

mixing a solution comprising an alkoxysilane condensate with a solution comprising an OH group-containing resin;
spraying the resulting coating liquid to a fertilizer; and
drying the resultant.

**16.** The method of producing a coated granular fertilizer according to claim 15, further comprising, during or after the drying, performing a heat treatment at 140°C or lower.

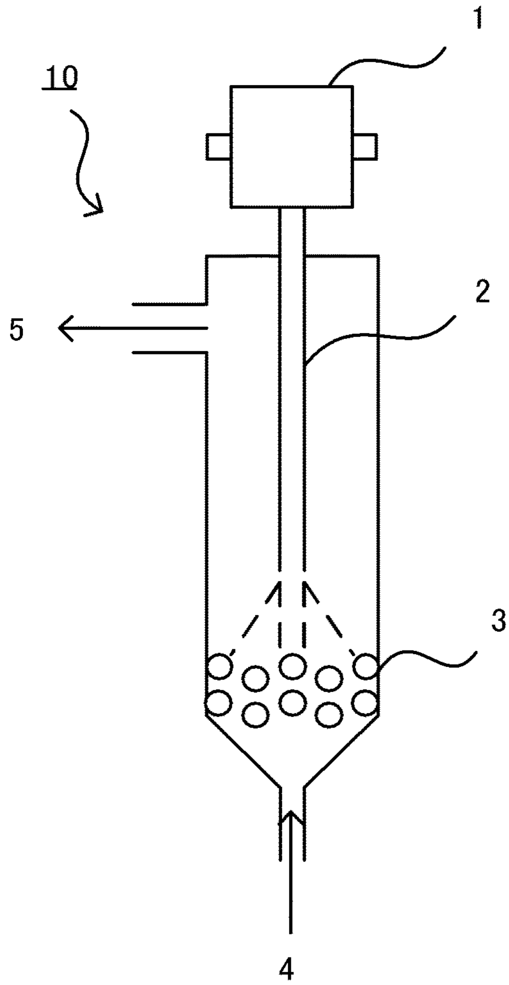


FIG. 1

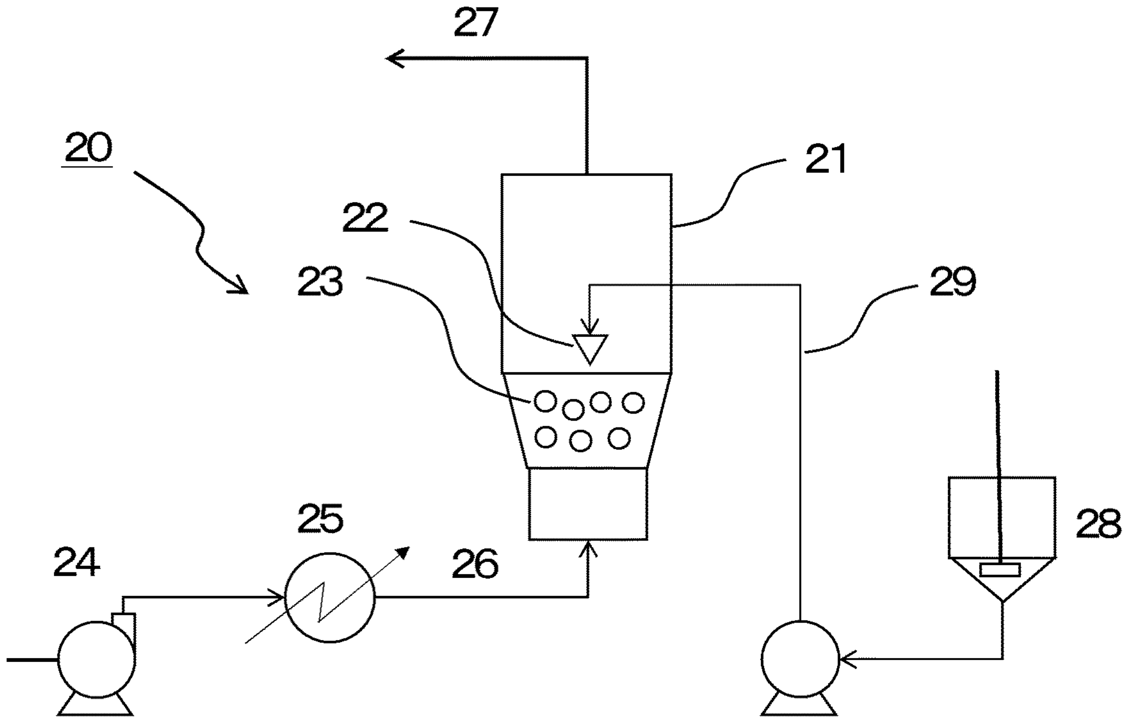


FIG. 2

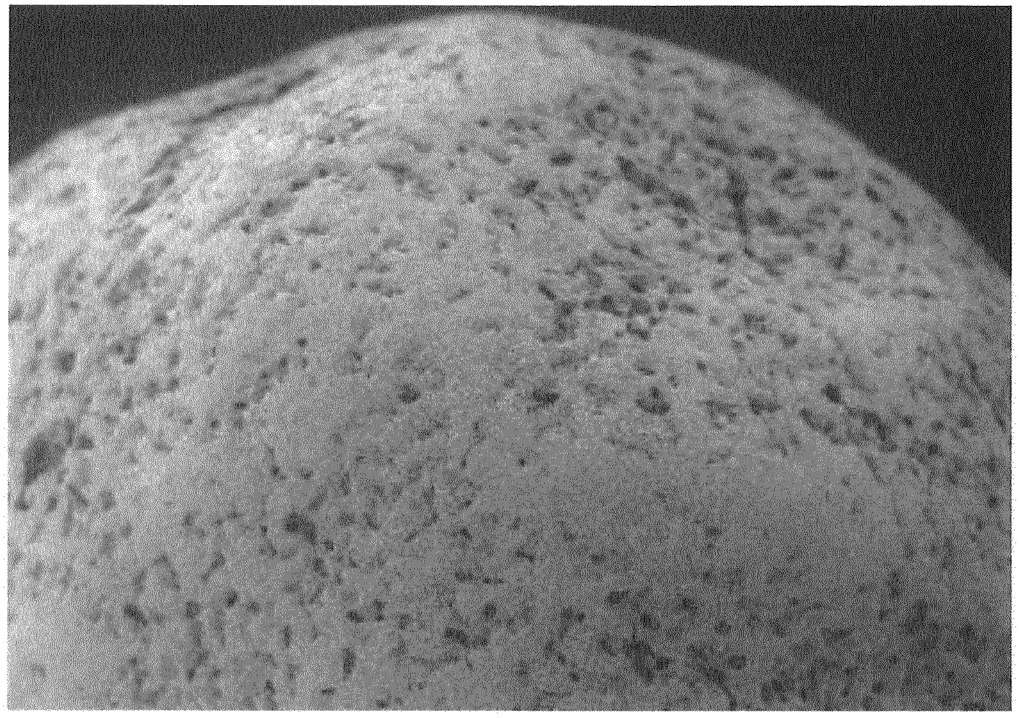

FIG. 3

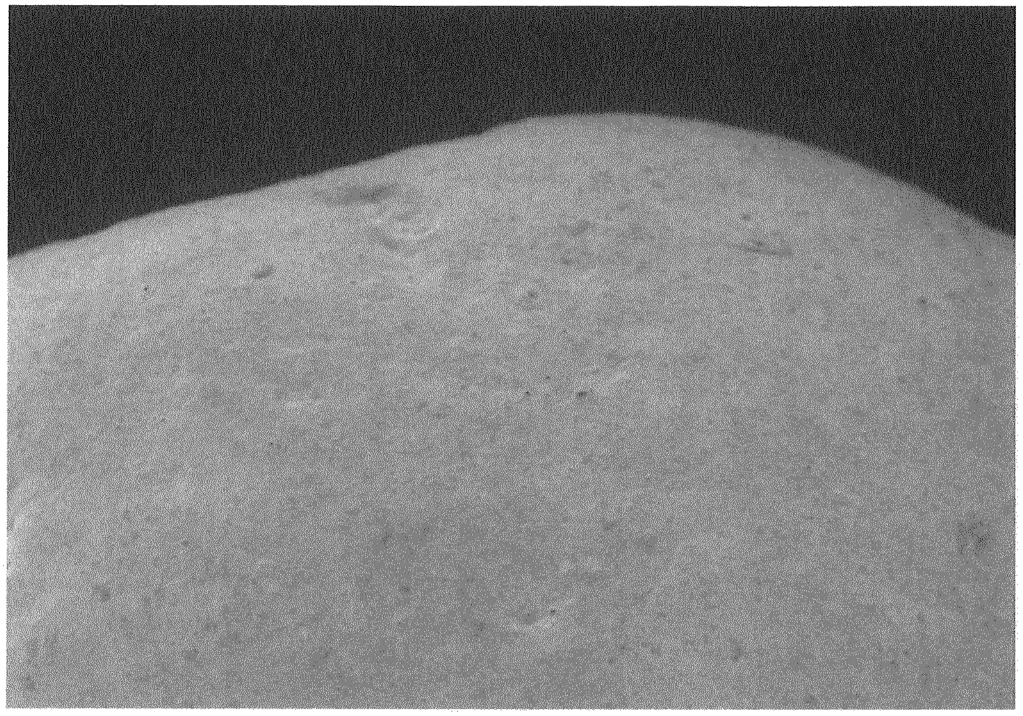

FIG. 4

## INTERNATIONAL SEARCH REPORT

International application No. **PCT/JP2022/016961**

**A. CLASSIFICATION OF SUBJECT MATTER**

***C05C 9/00***(2006.01)i; ***C05G 5/30***(2020.01)i
FI: C05G5/30; C05C9/00 A

According to International Patent Classification (IPC) or to both national classification and IPC

**B. FIELDS SEARCHED**

Minimum documentation searched (classification system followed by classification symbols)

C05C9/00; C05G5/30

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2000-335991 A (DAICEL CHEM IND LTD) 05 December 2000 (2000-12-05) claim 1, paragraphs [0001], [0020] | 1-16 |
| A | CN 104045484 A (MAANSHAN XINZHOU GRAPE SPECIALIZED COOPERATIVE) 17 September 2014 (2014-09-17) claims 1-2 | 1-16 |
| A | JP 2020-164520 A (MITSUBISHI CHEM CORP) 08 October 2020 (2020-10-08) claim 1, paragraphs [0001], [0012]-[0021] | 1-16 |
| A | US 2013/0109565 A1 (BODAY, Dylan J.) 02 May 2013 (2013-05-02) claims 1-23 | 1-16 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 June 2022** | **21 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/016961**

| Patent document cited in search report | Publication date (day/month/year) | Patent family member(s) | Publication date (day/month/year) |
|---|---|---|---|
| JP 2000-335991 A | 05 December 2000 | (Family: none) | |
| CN 104045484 A | 17 September 2014 | (Family: none) | |
| JP 2020-164520 A | 08 October 2020 | (Family: none) | |
| US 2013/0109565 A1 | 02 May 2013 | US 2014/0215905 A1<br>US 2014/0221202 A1<br>US 2014/0221212 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004075479 A
- JP 4804632 B
- JP H8277191 A


### Non-patent literature cited in the description


- *Hitachi Review,* vol. 43 (5), 90-94